# EUROPEAN PATENT APPLICATION

(11) **EP 3 901 877 A1**
(43) Date of publication of application: **27.10.2021**
(21) Application number: 21157221.9
(22) Date of filing: 15.02.2021
(51) Int. Cl.: G06Q 20/18, G06Q 20/20, G06Q 20/32, G07G 1/00, G07G 1/14

(54) **COMMODITY SALES PROCESSING SYSTEM**

(30) Priority: 23.03.2020 JP 2020051653
(71) Applicant: Toshiba TEC Kabushiki Kaisha, Tokyo 141-8562 (JP)
(72) Inventor: Ichikawa, Takashi, Shinagawa-ku, Tokyo 141-8562 (JP)
(74) Representative: Bandpay & Greuter

(57) **Abstract**

A commodity sales processing system includes a handheld wireless terminal including a display, a shopping cart including a code reader and a terminal holder, and a server system. The terminal holder includes a charging connector. The server system is configured to store a first ID of the handheld wireless terminal that is received from the handheld wireless terminal or the code reader, in association with a second ID of the code reader that is received from the handheld wireless terminal or the code reader, receive from the code reader a commodity code read thereby and store the received commodity code in a shopping list associated with the second ID, and generate image data indicating the shopping list and cause an image based on the generated image data to be displayed on the display of the handheld wireless terminal only when the handheld wireless terminal is connected to the charging connector.

## Description

### FIELD

Embodiments described herein relate generally to a commodity sales processing system.

### BACKGROUND

In recent years, commodity sales processing systems that allow consumers to register purchase commodities while shopping in stores such as supermarkets or convenience stores have been proposed. For example, there are systems in which cart-based registration terminals are used. These cart terminals include scanners and display devices and are mounted on shopping carts. In such types of systems, consumers use the scanner of the cart terminal to read barcodes on commodities being purchased. Then, barcode data is transmitted from the cart terminals to store servers or the like via wireless local area networks (LANs). The store servers perform processes for registering the data of the commodities being purchased based on the barcode data and transmits registration screen data indicating the processing results back to the cart terminal. The cart terminals display registration screens on the display devices based on the registration screen data. Thus, the consumers can confirm that the purchased commodities are correctly registered using the registration screens.

There are other registration systems in which information terminals such as smartphones owned by consumers themselves are used in a manner similar to the cart terminals. In such types of systems, consumers generally must install a dedicated application program for the store on the information terminal in advance. Then, the consumers use cameras of the information terminals to capture images of barcodes on commodities. Then, barcode data is transmitted from the information terminals to store servers via wireless LANs. The subsequent operations are similar to those systems in which cart terminals are used. Since registration screens are displayed on display devices of the information terminals, the consumers can confirm that purchase commodities are correctly registered.

In the systems in which the cart terminals are used, a cart terminal is necessary for each shopping cart. On the other hand, in the systems in which the information terminals owned by the consumers are used, it is not necessary for store sides to provide cart terminals or the like. Accordingly, for the stores, there is the advantage that an initial investment can be lower than for the systems in which the cart terminals are used. However, certain problems with the consumer terminals may arise, for example, cameras of smartphones may not be well designed for reading barcodes on commodities. For example, the consumer will often have to perform the operation of reading the barcodes by holding the information terminal with one hand and the commodity with the other. Therefore, it can be troublesome to read a barcode on a large commodity which may be difficult to hold with one hand. Thus, in the systems in which the information terminals owned by the consumers are used, user operability for reading barcodes may be worse than in the systems in which the specialized cart terminals are used.

### DESCRIPTION OF THE DRAWINGS

FIG. 1 is a block diagram illustrating an overall configuration of a commodity sales processing system according to an embodiment.
FIG. 2 illustrates a perspective view of an example of a shopping cart including a scanner module.
FIG. 3 is a block diagram of the scanner module.
FIG. 4 is a block diagram of an information terminal.
FIG. 5 is a block diagram of a coordination server.
FIG. 6 is a schematic diagram of a terminal coordination table.
FIG. 7 is a block diagram of a store server.
FIG. 8 is a schematic diagram illustrating a data structure of a scanner management table.
FIG. 9 is a block diagram of a virtual POS server.
FIG. 10 is a schematic diagram illustrating a data structure of a transaction file.
FIG. 11 is a flowchart of information processing performed by a processor of an information terminal.
FIG. 12 is a flowchart of information processing performed by the processor of the information terminal.
FIG. 13 is a flowchart of a state determination process (1) performed by the processor of the information terminal.
FIG. 14 is a flowchart of a state determination process (2) performed by the processor of the information terminal.
FIG. 15 is a flowchart of a state determination process (3) performed by the processor of the information terminal.
FIG. 16 is a flowchart of information processing performed by a processor of a coordination server.
FIG. 17 is a flowchart of information processing performed by the processor of the coordination server.
FIG. 18 is a flowchart of information processing performed by the processor of the coordination server.
FIG. 19 is a flowchart of information processing performed by the processor of the coordination server.
FIG. 20 is a flowchart of information processing performed by the processor of the coordination server.
FIG. 21 is a flowchart of information processing performed by the processor of the coordination server.
FIG. 22 is a flowchart of information processing performed by the processor of the coordination server.
FIG. 23 is a flowchart of information processing performed by the processor of a store server.
FIG. 24 is a flowchart of information processing performed by the processor of the store server.
FIG. 25 is a flowchart of an information processing performed by the processor of the store server.
FIG. 26 is a flowchart of information processing performed by the processor of the store server.
FIG. 27 is a flowchart of information processing performed by a processor of a virtual POS server.
FIG. 28 is a flowchart of information processing performed by the processor of the virtual POS server.
FIG. 29 is a flowchart of the information processing performed by the processor of the virtual POS server.
FIG. 30 is a flowchart of the information processing performed by the processor of the virtual POS server.
FIG. 31 is a diagram illustrating a display example of a code symbol indicating a coordination ID.
FIG. 32 is a diagram illustrating a display example of a shopping start screen.
FIG. 33 is a diagram illustrating a display example of a registration screen.
FIG. 34 is a diagram illustrating a display example of an accounting screen.
FIG. 35 is a block diagram of a scanner module according to a second embodiment.
FIG. 36 is a schematic explanatory diagram of certain aspects according to a third embodiment.
FIG. 37 is a flowchart of information processing performed by a processor of an information terminal according to the third embodiment.
FIG. 38 is a flowchart of a coordination notification command reception process performed by a processor of a coordination server according to the third embodiment.

### DETAILED DESCRIPTION

In general, an exemplary embodiment provides a commodity sales processing system in which an information terminal owned by a consumer can be used so a commodity can be registered with by the consumer using the information terminal with good operability.

According to an embodiment, a commodity sales processing system includes a handheld wireless terminal including a display, a shopping cart including a code reader and a terminal holder, and a server system. The terminal holder includes a charging connector connectable to the handheld wireless terminal. The server system is communicable with the handheld wireless terminal and the code reader. The server system is configured to store a first ID of the handheld wireless terminal that is received from the handheld wireless terminal or the code reader, in association with a second ID of the code reader that is received from the handheld wireless terminal or the code reader, receive from the code reader a commodity code read thereby and store the received commodity code in a shopping list associated with the second ID, and generate image data indicating the shopping list and cause an image based on the generated image data to be displayed on the display of the handheld wireless terminal only when the handheld wireless terminal is connected to the charging connector.

Preferably, the handheld wireless terminal is configured to display a code symbol representing a code corresponding to the first ID on the display, and the code reader is configured to transmit to the server system the code read from the code symbol along with the second ID of the code reader.

Preferably, a code corresponding to the first ID includes a third ID identifying association of the first ID with the second ID, the third ID being assigned by the server system and received by the handheld wireless terminal.

Preferably, the code reader is communicable with the handheld wireless terminal, and the code reader is configured to receive a code corresponding to the first ID from the handheld wireless terminal, and transmit to the server system the code received from the handheld wireless terminal along with the second ID of the code reader.

Preferably, the code reader includes on a surface thereof a code symbol representing the second ID of the code reader, and the handheld wireless terminal includes a camera and is configured to transmit to the server system the first ID and the second ID that is obtained from an image of the code symbol captured by the camera.

Preferably, a first server in the server system is communicable with the handheld wireless terminal via a first wireless network, and a second server in the server system is communicable with the code reader via a second wireless network including an access point provided in a store, the second wireless network being different from the first wireless network.

Preferably, the handheld wireless terminal is further configured to perform an operation to determine a state of connection with the charging connector, and upon determining that the state of connection is a disconnected state, transmit to the server system information indicating the disconnected state.

Preferably, the handheld wireless terminal is further configured to disable display of the image on the display when the state of connection is the disconnected state.

Preferably, the handheld wireless terminal is further configured to execute a shopping assist program to display screens to assist shopping and disable display of the screens on the display when the state of connection is the disconnected state.

Preferably, the server system is further configured to dissociate the second ID from the first ID upon receiving the information indicating the disconnected state.

Preferably, the server system is further configured to disable settlement based on the shopping list upon receiving the information indicating the disconnected state.

Preferably, the handheld wireless terminal includes a power unit configured to output a signal indicating whether or not the handheld wireless terminal is chargeable via the charging connector, and the handheld wireless terminal is configured to determine the disconnected state based on the signal from the power unit.

There is also provided a commodity sales processing method using a system including a handheld wireless terminal including a display, a shopping cart including a code reader and a terminal holder, the terminal holder including a charging connector connectable to the handheld wireless terminal, and a server system communicable with the handheld wireless terminal and the code reader, the method comprising: receiving, by the server system, a first ID of the handheld wireless terminal from the handheld wireless terminal or the code reader; receiving, by the server system, a second ID of the code reader from the handheld wireless terminal or the code reader; storing, in the server system, the first ID of the handheld wireless terminal in association with the second ID of the code reader; receiving, by the server system, a commodity code read by the code reader; storing the received commodity code in a shopping list associated with the second ID; and generating, by the server system, image data indicating the shopping list, to cause an image based on the generated image data to be displayed on the display of the handheld wireless terminal only when the handheld wireless terminal is connected to the charging connector.

Preferably, the commodity sales processing method further comprises: displaying a code symbol representing a code corresponding to the first ID on the display of the handheld wireless terminal; reading, by the code reader, the code symbol displayed on the display; and transmitting from the code reader to the server system the code read from the code symbol along with the second ID of the code reader.

Preferably, the code reader is communicable with the handheld wireless terminal, and the method further comprises: receiving, by the code reader, a code corresponding to the first ID from the handheld wireless terminal; and transmitting, from the code reader to the server system, the code received from the handheld wireless terminal along with the second ID of the code reader.

Hereinafter, certain example embodiments of a commodity sales processing system will be described with reference to the drawings. The commodity sales processing system allows consumers to register purchase commodities while shopping in retail stores such as supermarkets or convenience stores.

### First Embodiment

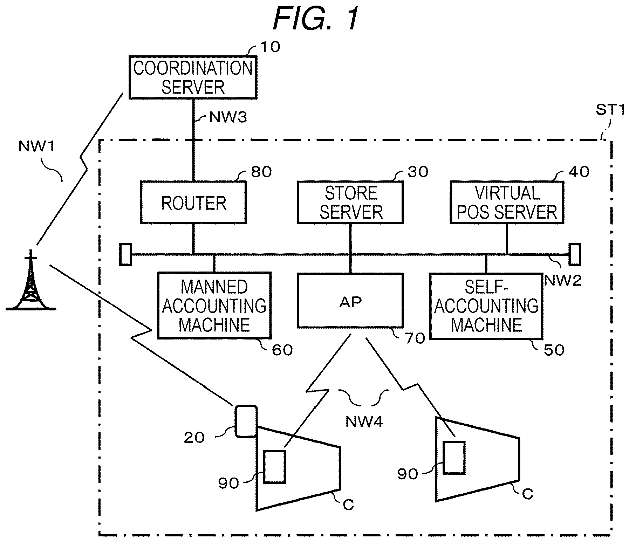

FIG. 1 is a block diagram illustrating an overall configuration of a commodity sales processing system according to an embodiment. The commodity sales processing system includes a coordination server 10. The coordination server 10 can be a cloud computing server that provides a service to an information terminal 20 via a wide area network NW1 such as the Internet. The information terminal 20 is owned by a consumer (customer) who shops in a store ST1. For example, a terminal such as a smartphone or a tablet terminal compliant with the Internet is used as the information terminal 20.

The commodity sales processing system includes a store server 30, a virtual point of sales (POS) server 40, a self-accounting machine 50, a manned accounting machine 60, a router 80, and an access point 70. These devices are provided in the store ST1. An in-store network NW2 such as a LAN is laid in the store ST1 and each device is connected to the in-store network NW2.

The store server 30 is a server computer that supports all store transactions. The virtual POS server 40 is a server computer that provides an environment in which a plurality of POS terminals virtually operate using a virtual POS application program. Hereinafter, the virtual POS application program is abbreviated to a virtual POS application.

The self-accounting machine 50 is an accounting machine that allows a customer to perform settlement accounting (payment processing) of commodities being purchased in a sales transaction. The manned accounting machine 60 is an accounting machine that allows a store staff member to perform settlement accounting of the commodities being purchased by a customer. As the self-accounting machine 50, a known self-service POS terminal or a semi-self-service POS machine can be applied. As the manned accounting machine 60, a known POS terminal or an electronic cash register can be applied.

The router 80 connects the coordination server 10 via a dedicated communication network NW3. The router 80 is a network device that relays data communication between each device connected to the in-store network NW2 and the coordination server 10.

The access point 70 is included in an in-store network NW4 that receives a connection request from a wireless communication device located in the store ST1 and performs wireless connection with the wireless communication device. In the store ST1, the scanner module 90 is located as a wireless communication device. The scanner module 90 is mounted on a shopping cart C. Hereinafter, the shopping cart C is abbreviated to a cart C.

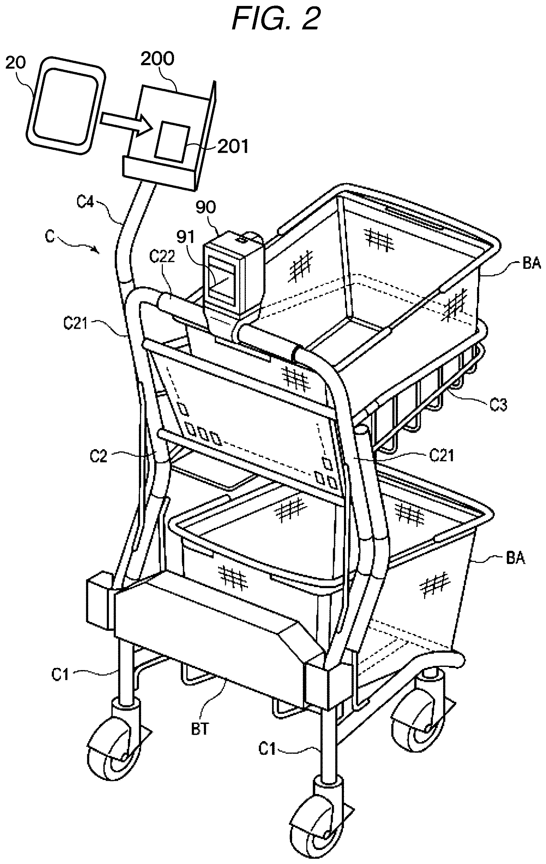

FIG. 2 illustrates a perspective view of an example of the cart C including the scanner module 90. The cart C includes a caster portion C1 for movement and a handle frame portion C2, and a basket portion C3. The caster portion C1 has four wheels to smoothly move on the surface of a floor. The handle frame portion C2 includes a pair of vertical frames C21 erect on the rear wheel side of the caster portion C1 and a handlebar C22 connecting the upper ends of the vertical frames C21. The basket portion C3 is in the middle of the hand frame portion C2 on the front side. In the cart C, a shopping basket BA provided in a store can be put in the basket portion C3 and the lower portion of the cart C.

In the cart C that has the configuration, the scanner module 90 is fitted in the middle of the handlebar C22. The scanner module 90 is mounted on the handlebar C22 so that a reading window 91 is located on the front side. The front side is a side on which a guest who holds the handlebar C22 and pushes the cart C. A battery BT is mounted between the vertical frames C21 on the lower end side of the handle frame portion C2. The battery BT is a power supply source that feeds power to the scanner module 90 and the information terminal 20 put on a stand 200.

A pole C4 is mounted on one of the vertical frames C21 of the cart C. The stand 200 of the information terminal 20 is provided on the front end of the pole C4. A consumer using the cart C places the information terminal 20 owned by the consumer on the stand 200 for shopping. A charging connection unit 201 that supplies power to charge the information terminal 20 is provided on the stand 200. The charging connection unit 201 includes, for example, a charging terminal (or a charging cable) connected to a chargeable terminal of the information terminal 20 and a charging pad (a wireless charger) that feeds power by contactless feeding (wireless feeding).

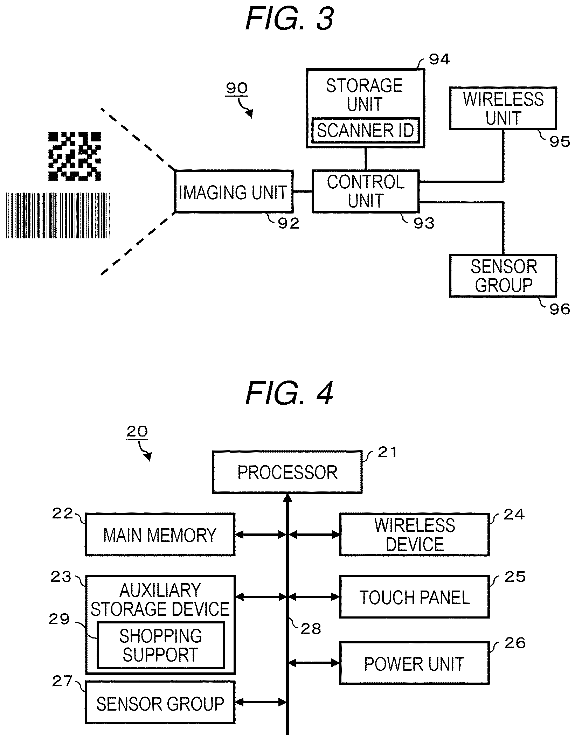

FIG. 3 is a block diagram illustrating a functional configuration of the scanner module 90. The scanner module 90 includes an imaging unit 92, a control unit 93, a memory 94, a wireless unit 95, and a sensor group 96. The imaging unit 92 captures an image including a barcode or a 2-dimensional code through the reading window 91. The control unit 93 reads data of the barcode or the 2-dimensional code from the image captured by the imaging unit 92. The memory 94 stores the data read by the control unit 93. The memory 94 stores a fixed scanner ID. The scanner ID is a unique identification code set for each scanner module 90 to identify the individual scanner module 90. The wireless unit 95 transmits the data of the barcode or the 2-dimensional code stored in the memory 94 along with a scanner ID in conformity with a predetermined wireless communication scheme under the condition that the wireless unit is connected to the access point 70 via the in-store network NW4. The sensor group 96 is various sensors including an acceleration sensor, a gyro sensor (an azimuth sensor), and a magnetic sensor. The control unit 91 measures a movement direction, a movement distance, a movement speed, and the like of the scanner module 90 based on data detected by the sensor group 96. The memory 94 stores data indicating measurement values measured by the control unit 93. The wireless unit 95 transmits the data indicating the measurement values along with the scanner ID in conformity with a predetermined wireless communication scheme.

FIG. 4 is a block diagram illustrating a circuit configuration of the information terminal 20. The information terminal 20 includes a processor 21, a main memory 22, an auxiliary storage device 23, a wireless device 24, a touch panel 25, and a power unit 26, a sensor group 27, and a system transmission path 28. The system transmission path 28 includes an address bus, a data bus, and a control signal line. In the information terminal 20, the processor 21, the main memory 22, the auxiliary storage device 23, the wireless device 24, the touch panel 25, and the power unit 26 are connected to the system transmission path 28. In the information terminal 20, a computer is configured by the processor 21, the main memory 22, the auxiliary storage device 23, and the system transmission path 28 connecting them to each other.

The processor 21 is equivalent to a central unit of the computer. The processor 21 controls each unit such that various functions of the information terminal 20 can be performed in accordance with an operating system or an application program. The processor 21 is, for example, a central processing unit (CPU).

The main memory 22 is equivalent to a main memory of the computer. The main memory 22 includes a nonvolatile memory area and a volatile memory area. The main memory 22 stores an operating system or an application program in the nonvolatile memory area. The main memory 22 stores data necessary for the processor 21 to perform a process of controlling each unit in the volatile memory area. The data is stored in the nonvolatile memory area in some cases. In the main memory 22, the volatile memory area is used as a working area in which data can be appropriately rewritten by the processor 21. The nonvolatile memory area is, for example, a read-only memory (ROM). The volatile memory area is, for example, a random access memory (RAM).

The auxiliary storage device 23 is equivalent to an auxiliary memory of the computer. For example, an electric erasable programmable read-only memory (EEPROM), a hard disc drive (HDD), or a solid-state drive (SSD) can be used as the auxiliary storage device 23. The auxiliary storage device 23 stores data which is used for the processor 21 to perform various processes, data which is generated through a process by the processor 21, and the like. The auxiliary storage device 23 stores the foregoing application program in some cases.

The application program stored in the auxiliary storage device 23 includes a shopping support program 29. The shopping support program 29 is used when a consumer performs shopping in the store ST1. A method of installing the shopping support program 29 in the auxiliary storage device 23 is not particularly limited. A control program can be installed in the auxiliary storage device 23 by recording the control program on a removable medium or by transferring the control program through communication via a network. The recording medium may have any applicable form as long as the recording medium can store a program and a device can read the program, as in a CD-ROM or a memory card. The shopping support program 29 may be installed in the main memory 22 other than the auxiliary storage device 23.

The wireless device 24 is a device that performs wireless communication of data with the coordination server 10 connected via the wide area network NW1 in conformity with a predetermined wireless communication protocol.

The touch panel 25 is a device that serves as both an input device and a display device of the information terminal 20. The touch panel 25 displays various images. The touch panel 25 detects a touch position on a displayed image and outputs touch position information to the processor 21.

The power unit 26 is a unit that supplies power to each unit of the information terminal 20. The power unit 26 has a battery and is connected to an external power supply source in a wired or wireless manner to charge the battery. For example, the power unit 26 can detect connection with a charging terminal (or a charging cable) of the charging connection unit 201 of the stand 200 or can detect a start state of contactless feeding (wireless feeding) by a wireless pad (a wireless charger) and notifies the processor 21 of the detection.

The sensor group 27 has various sensors including an acceleration sensor, a gyro sensor (an azimuth sensor), a magnetic sensor, and a Global Positioning System (GPS) sensor. Based on data detected by the sensor group 27, a movement direction, a movement distance, a movement speed, and the like of the information terminal 20 can be measured.

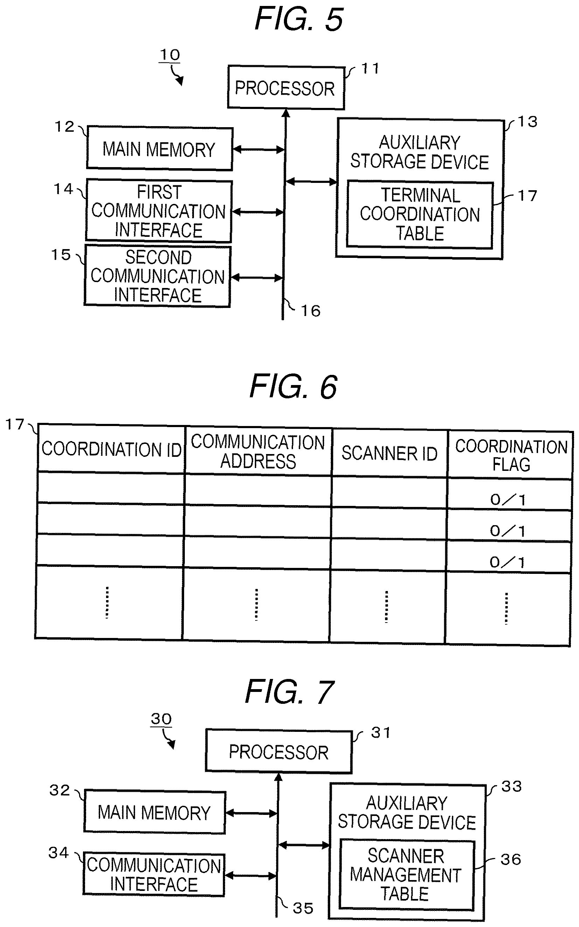

FIG. 5 is a block diagram illustrating a circuit configuration of the coordination server 10. The coordination server 10 includes a processor 11, a main memory 12, an auxiliary storage device 13, a first communication interface 14, a second communication interface 15, and a system transmission path 16. The system transmission path 16 includes an address bus, a data bus, and a control signal line. In the coordination server 10, the processor 11, the main memory 12, the auxiliary storage device 13, the first communication interface 14, and the second communication interface 15 are connected to the system transmission path 16. In the coordination server 10, a computer is configured by the processor 11, the main memory 12, the auxiliary storage device 13, and the system transmission path 16 connecting them to each other.

The processor 11 is equivalent to a central unit of the computer. The processor 11 controls each unit such that various functions of the coordination server 10 can be performed in accordance with an operating system or an application program. The processor 11 is, for example, a CPU.

The main memory 12 is equivalent to a main memory of the computer. The main memory 12 includes a nonvolatile memory area and a volatile memory area. The main memory 12 stores an operating system or an application program in the nonvolatile memory area. The main memory 12 stores data necessary for the processor 11 to perform a process of controlling each unit in the volatile memory area. The data is stored in a nonvolatile memory area in some cases. In the main memory 12, the volatile memory area is used as a working area in which data can be appropriately rewritten by the processor 11. The nonvolatile memory area is, for example, a read-only memory (ROM). The volatile memory area is, for example, a random access memory (RAM).

The auxiliary storage device 13 is equivalent to an auxiliary memory of the computer. For example, an EEPROM, an HDD, or an SSD can be used as the auxiliary storage device 13. The auxiliary storage device 13 stores data which is used for the processor 11 to perform various processes, data which is generated through a process by the processor 11, and the like. The auxiliary storage device 13 stores the foregoing application program in some cases.

The application program stored in the main memory 12 or the auxiliary storage device 13 includes a control program in which information processing performed by the coordination server 10 is described. A method of installing the control program in the main memory 12 or the auxiliary storage device 13 is not particularly limited as in the case of the shopping support program 29.

The first communication interface 14 is an interface circuit that performs wireless communication of data with the information terminal 20 connected via the wide area network NW1 in conformity with a predetermined wireless communication protocol.

The second communication interface 15 is an interface circuit that transmits and receives data to and from the router 80 connected via a communication network NW3 in conformity with a predetermined communication protocol.

The coordination server 10 that has the configuration stores the terminal coordination table 17 in the auxiliary storage device 13. A destination to which the terminal coordination table 17 is stored is not limited to the auxiliary storage device 13. The terminal coordination table 17 may be stored in the volatile memory area of the main memory 12.

FIG. 6 is a schematic diagram illustrating a data structure of the terminal coordination table 17. As illustrated in FIG. 6, the terminal coordination table 17 has a data field in which a coordination ID, a communication address, a scanner ID, and a coordination flag related to each other are described in the same row.

The coordination ID is a unique code set in each information terminal 20 to identify the individual information terminal 20 owned by a consumer. The coordination ID is automatically generated in the coordination server 10.

The communication address is a communication address set in the information terminal 20 identified with the coordination ID in the same row. For example, an IP address is equivalent to the communication address.

The scanner ID is a code for identifying the scanner module 90 operating in coordination with the information terminal 20 identified with the coordination ID in the same row. The unique scanner ID is set in advance in the scanner module 90 mounted on each cart C.

A coordination flag is 1-bit data indicating whether a coordination state between the information terminal 20 identified with the coordination ID in the same row and the scanner module 90 identified with the scanner ID is established. In the embodiment, the coordination flag is set to "1" when the coordination state is established. The coordination flag is set to "0" when the coordination state is not established.

FIG. 7 is a block diagram illustrating a circuit configuration of the store server 30. The store server 30 includes a processor 31, a main memory 32, an auxiliary storage device 33, a communication interface 34, and a system transmission path 35. Since description of the processor 31, the main memory 32, the auxiliary storage device 33, and the system transmission path 35 are the same as the processor 11, the main memory 12, the auxiliary storage device 13, and the system transmission path 16 of the coordination server 10, the description will be omitted here.

The communication interface 34 is an interface circuit that performs data communication with each device connected via the in-store network NW2.

The store server 30 that has the configuration stores the scanner management table 36 in the auxiliary storage device 33. A destination to which the scanner management table 36 is stored is not limited to the auxiliary storage device 33. The scanner management table 36 may be stored in the volatile memory area of the main memory 32.

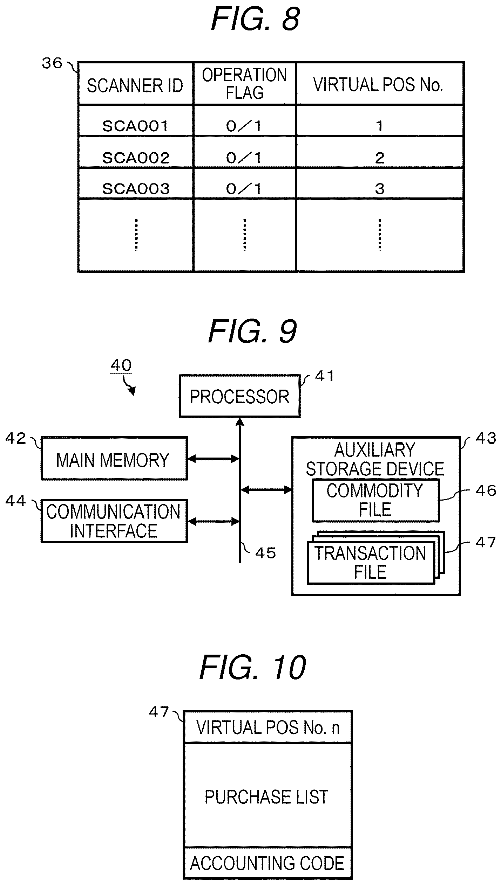

FIG. 8 is a schematic diagram illustrating a data structure of the scanner management table 36. As illustrated in FIG. 8, the scanner management table 36 has a data field in which a scanner ID, an operation flag, and a virtual POS No. related to each other are described in the same row. In the data field of the scanner ID, the scanner ID of each scanner module 90 mounted on each cart C is described in advance.

An operation flag is 1-bit data indicating whether the scanner module 90 identified with the scanner ID in the same row is operating. In the embodiment, the operation flag is set to "1" when the scanner module 90 is operating. The operation flag is set to "0" when the scanner module 90 is not operating.

A virtual POS No. is a serial number set in each a virtual POS application to identify an individual virtual POS application executed in the virtual POS server 40 in association with the scanner module 90 identified with the scanner ID in the same row.

FIG. 9 is a block diagram illustrating a circuit configuration of the virtual POS server 40. The virtual POS server 40 includes a processor 41, a main memory 42, an auxiliary storage device 43, a communication interface 44, and a system transmission path 45. Since description of the processor 41, the main memory 42, the auxiliary storage device 43, the communication interface 44, and the system transmission path 45 are the same as the processor 31, the main memory 32, the auxiliary storage device 33, the communication interface 34, and the system transmission path 35 of the store server 30, the description will be omitted here.

The virtual POS server 40 that has the configuration stores a commodity file 46 in the auxiliary storage device 43. The commodity file 46 is a data file in which commodity data such as a commodity name and a price of a commodity identified with a commodity ID in association with the unique commodity ID set in each commodity to identify each individual commodity sold in the store ST1 is described.

The virtual POS server 40 stores a plurality of transaction files 47 in the auxiliary storage device 43. A destination to which the commodity file 46 and the transaction file 47 are stored is not limited to the auxiliary storage device 43. At least one of the commodity file 46 and the transaction file 47 may be stored in the volatile memory area of the main memory 42.

FIG. 10 is a schematic diagram illustrating a data structure of the transaction file 47. As illustrated in FIG. 10, the transaction file 47 includes an area of a virtual POS No., an area of a purchase list, and an area of an accounting code. In the area of the virtual POS No., a number (No.) n of the virtual POS application executed in association with the transaction file 47 is described. In the area of the purchase list, a commodity ID, a commodity name, a price, and the like of a commodity registered for sale is described in a list form in accordance with the virtual POS application of the number (No.) n. In the area of the accounting code, an accounting code necessary for accounting of the commodity described in the area of the purchase list is described. The accounting code is appropriately generated in the store server 30.

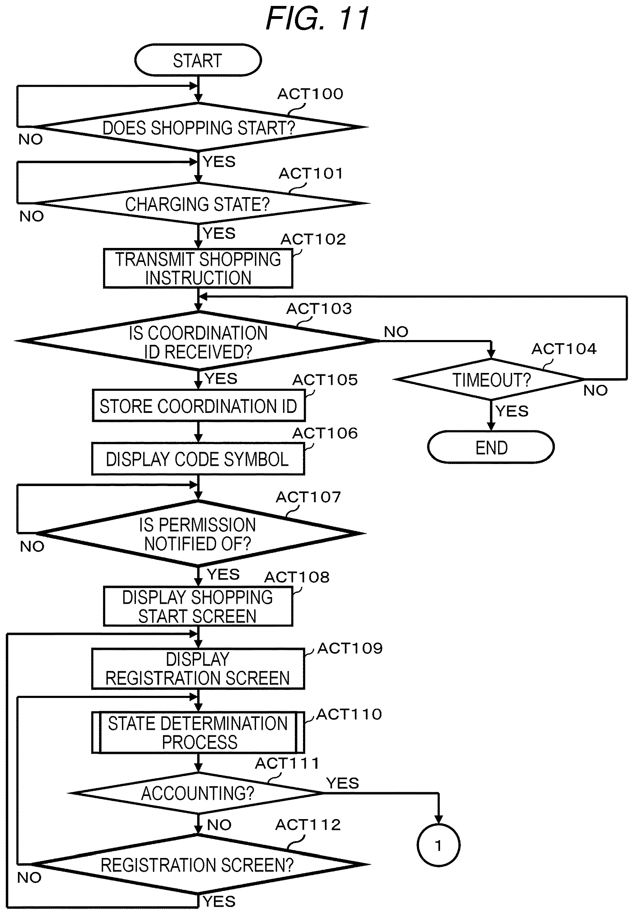

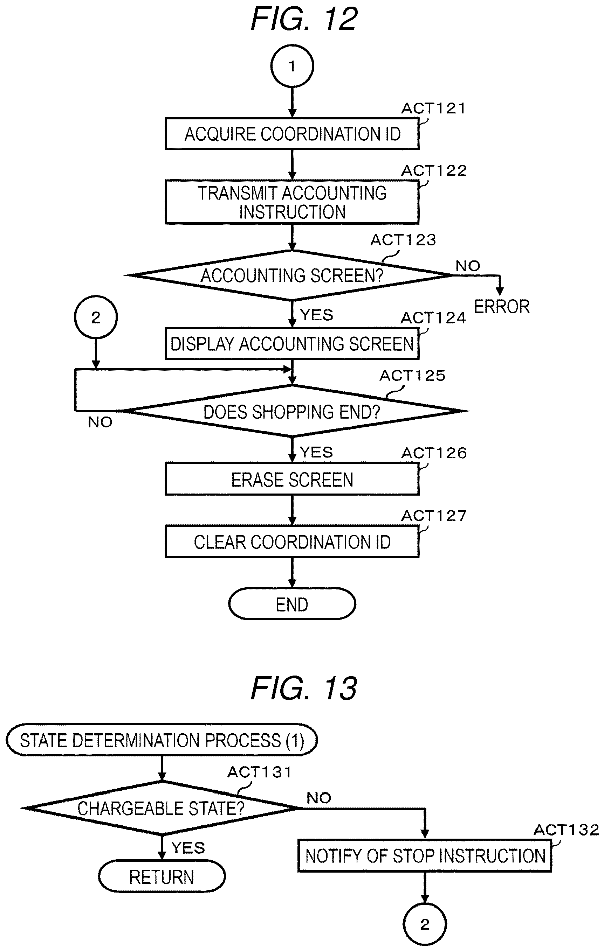

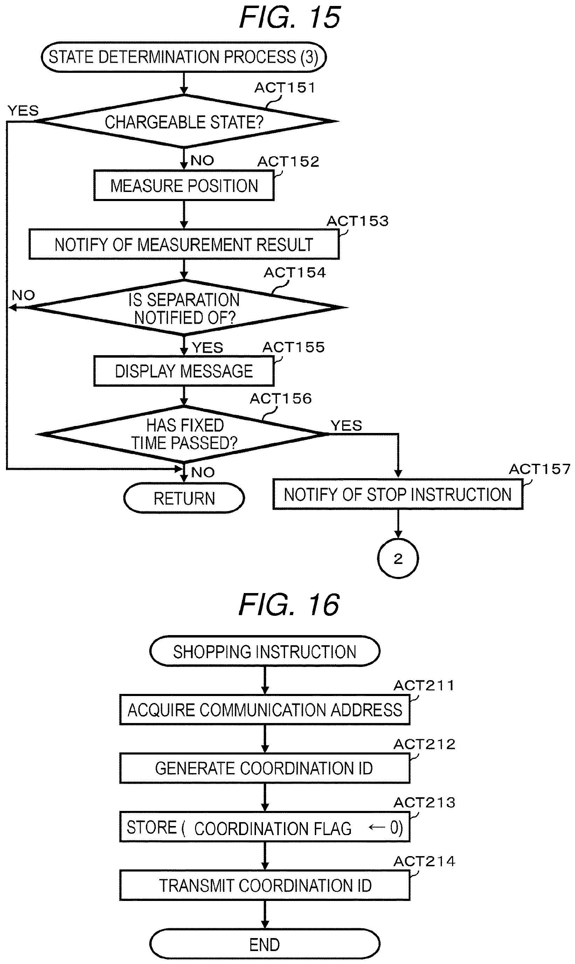

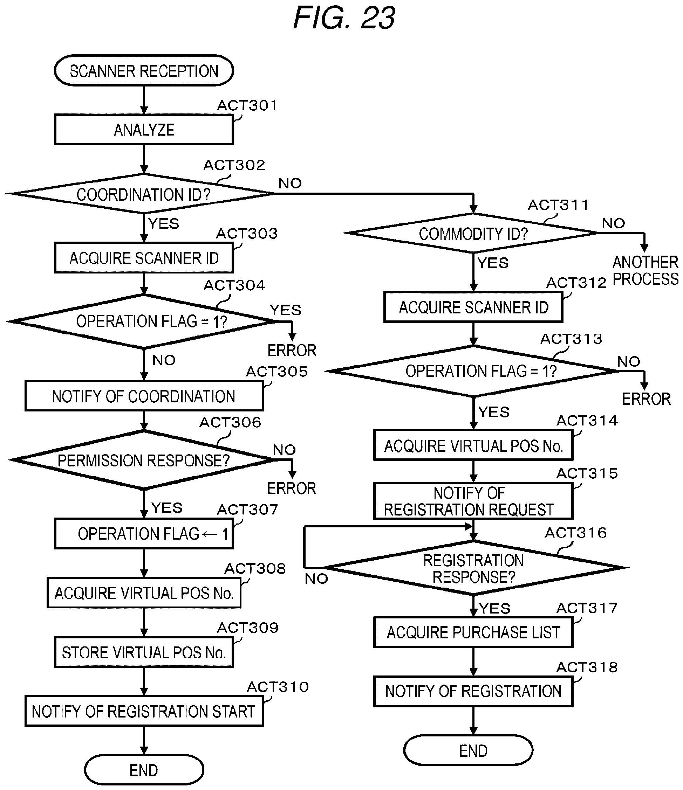

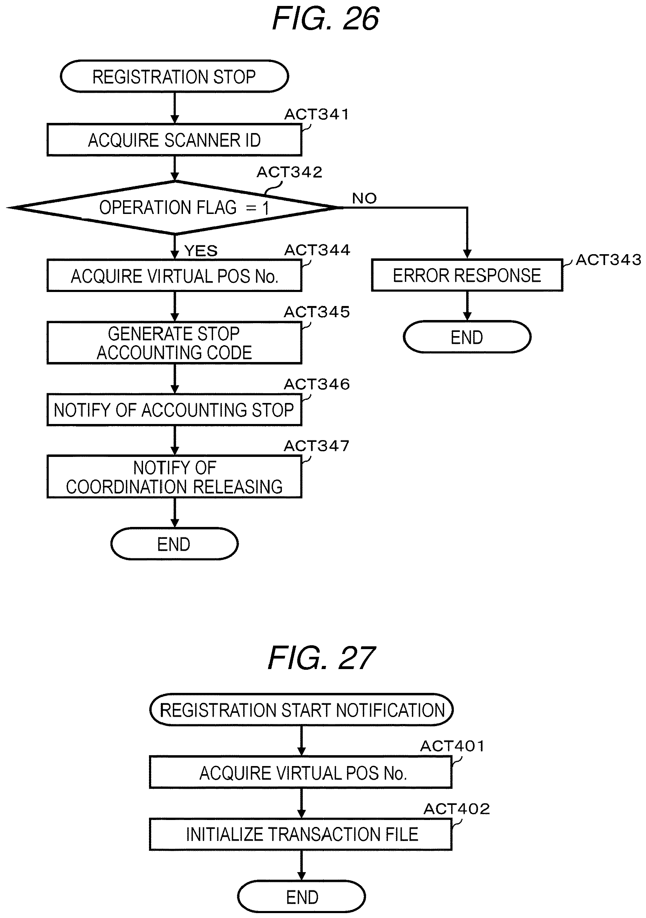

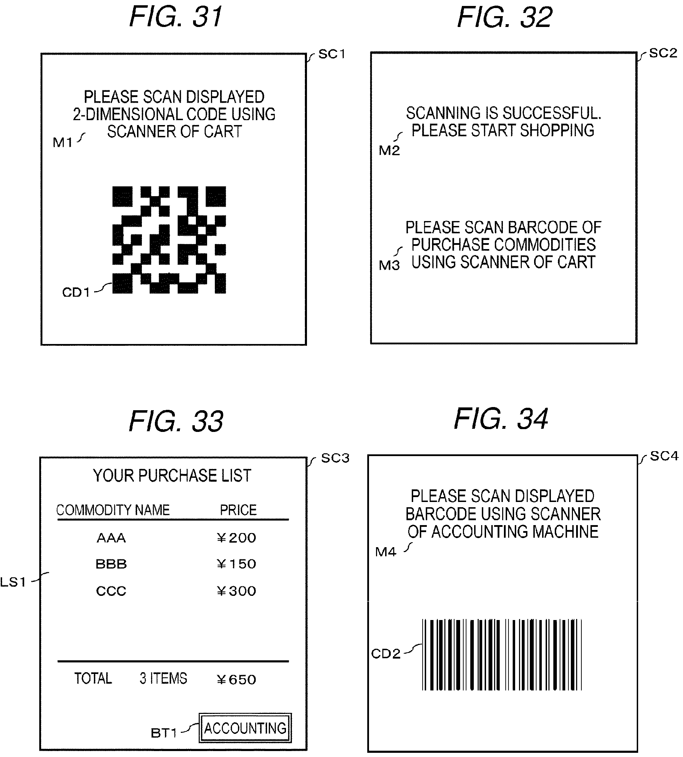

FIGS. 11 to 15 are flowcharts illustrating an order of information processing performed by the processor 21 of the information terminal 20 in accordance with the shopping support program 29. FIGS. 13 to 15 are flowcharts illustrating an order of state determination processes (1) to (3) performed by the processor 21 of the information terminal 20. FIGS. 16 to 22 are flowcharts illustrating an order of information processing performed by the processor 11 of the coordination server 10. FIGS. 23 to 26 are flowcharts illustrating an order of information processing performed by the processor 31 of the store server 30. FIGS. 27 to 30 are flowcharts illustrating an order of information processing performed by the processor 41 of the virtual POS server 40. FIGS. 31 to 34 are schematic diagrams illustrating examples of various images displayed on the touch panel 25 of the information terminal 20. Hereinafter, an operation of the commodity sales processing system will be described with reference to the drawings. The description of the operation to be described below is exemplary. The order or the like is not particularly limited as long as the same results can be obtained.

A consumer who performs shopping in the store ST1 activates the shopping support program 29 installed in the information terminal 20. When the shopping support program 29 is activated, the processor 21 of the information terminal 20 starts information processing in the order illustrated in the flowcharts of FIGS. 11 and 12.

That is, in ACT 100, the processor 21 waits for an instruction to start the shopping. When the shopping support program 29 is activated, an initial screen is displayed on the touch panel 25 of the information terminal 20. A shopping start button is displayed on the initial screen. The consumer touches the shopping start button. When the shopping start button is touched, the processor 21 determines whether the information terminal 20 is put on the stand 200 and is in a chargeable state via the charging connection unit 201 in ACT 101. When the chargeable terminal is connected to the charging terminal of the charging connection unit 201 (or the charging cable is connected) or contactless feeding (wireless feeding) by the charging pad (the wireless charger) of the charging connection unit 201 is detected, the power unit 26 notifies the processor 21 that the information terminal 20 enters the charging state.

When the power unit 26 notifies the processor 21 that the information terminal 20 enters the charging state, the processor 21 recognizes that the shopping stars. The processor 21 determines YES in ACT 101 and the process proceeds to ACT 102. In ACT 102, the processor 21 controls the wireless device 24 such that a shopping instruction command is transmitted to the coordination server 10. Through this control, the shopping instruction command is wirelessly transmitted from the wireless device 24. The shopping instruction command is received by the coordination server 10 via the wide area network NW1. The shopping instruction command includes the communication address of the information terminal 20, for example, an IP address.

When the shopping instruction command is received via the first communication interface 14, the processor 11 of the coordination server 10 starts information processing in the order illustrated in the flowchart of FIG. 16. That is, in ACT 211, the processor 11 acquires the communication address of the information terminal 20 from the shopping support command. In ACT 212, the processor 11 generates a unique coordination ID corresponding to the shopping instruction command.

In ACT 213, the processor 11 stores the coordination ID generated in ACT 212 and the communication address acquired in ACT 211 in the same row in the terminal coordination table 17. The processor 11 sets "0" in the coordination flag in the same row. In the field of the scanner ID in the same row, data is not set at this time point.

In ACT 214, the processor 11 controls the first communication interface 14 such that the data of the coordination ID generated in ACT 212 is transmitted to the communication address acquired in ACT 211 as a destination. Through this control, the data of the coordination ID is transmitted from the first communication interface 14. The data is received by the wireless device 24 of the information terminal 20 in which the communication address of the destination is set via the wide area network NW1.

FIG. 11 is referred back to for description.

The processor 21 of the information terminal 20 controlling the transmission of the shopping instruction command determines whether the data of the coordination ID is received in ACT 103. When the data of the coordination ID is not received, the processor 21 determines NO in ACT 103 and the process proceeds to ACT 104. In ACT 104, the processor 21 determines whether a time which has passed after the control of the transmission of the shopping instruction command exceeds a preset timeout. The timeout is, for example, 10 seconds. When the time which has passed does not yet exceed the timeout, the processor 21 determines NO in ACT 104 and the process returns to ACT 103. Here, the processor 21 waits in ACT 103 and ACT 104 until the data of the coordination ID is received or the timeout has passed. When the timeout has passed in this waiting state, the processor 21 determines YES in ACT 104 and ends the process.

When the data of the coordination ID is received before the passing of the timeout, the processor 21 determines YES in ACT 103 and the process proceeds to ACT 105. In ACT 105, the processor 21 stores the data of the coordination ID. A destination to which the data is stored may be the volatile memory of the main memory 22 or may be the auxiliary storage device 23. In ACT 106, the processor 21 displays a code symbol indicating the coordination ID on the touch panel 25 based on the stored data.

FIG. 31 illustrates an example of a screen SC1 in which a code symbol CD1 indicating the coordination ID is displayed on the touch panel 25. In the embodiment, the code symbol CD1 is displayed in the form of a 2-dimensional code. The 2-dimensional code is a code symbol which can be read by the scanner module 90. The screen SC1 includes a message M1 for guiding the consumer to scan the code symbol CD1 using the scanner module 90 of the cart C. In addition, the code symbol CD1 need not necessarily have the form of the 2-dimensional code. The code symbol CD1 may be, for example, a barcode with one stage or a barcode with two or more stages as long as the code symbol can be read using the scanner module 90.

The consumer checking the screen SC1 holds the screen SC1 to the reading window 91 of the scanner module 90 mounted on the used cart C. When the imaging unit 92 of the scanner module 90 captures an image including the code symbol CD1 through this operation, the control unit 93 reads the data of the code symbol CD1, in the end, the coordination ID. The data of the coordination ID is wirelessly transmitted along with the scanner ID stored in the memory 94 via the in-store network NW4 through the operation of the wireless unit 95.

In addition, when the imaging unit 92 captures the image including the barcode, the scanner module 90 operates similarly. That is, the data of the barcode is wirelessly transmitted along with the scanner ID via the in-store network NW4. Then, the data wirelessly transmitted from the scanner module 90 is received by the access point 70 and is sent to the store server 30 via the in-store network NW2.

When the data transmitted from the scanner module 90 is received via the communication interface 34, the processor 31 of the store server 30 starts information processing in the order illustrated in the flowchart of FIG. 23. That is, in ACT 301, the processor 31 analyzes the received data. Then, in ACT 302, the processor 31 determines whether the received data includes the data of the coordination ID. In this case, since the received data includes the data of the coordination ID, the processor 31 determines YES in ACT 302 and the process proceeds to ACT 303.

In ACT 303, the processor 31 acquires the scanner ID as the received data. Hereinafter, the scanner ID is referred to as the acquired scanner ID. The processor 31 examines an operation flag in the same row as the row of the acquired scanner ID of the scanner management table 36. The operation flag is set to "0," as the initial state.

When it is determined that the operation flag is not set to "1," that is, is set to "0," the processor 31 determines NO in ACT 304 and the process proceeds to ACT 305. In ACT 305, the processor 31 controls the communication interface 34 such that a coordination notification command is transmitted to the coordination server 10. Through this control, the coordination notification command is transmitted from the communication interface 34. The coordination notification command is received by the router 80 via the in-store network NW2 and is further received by the coordination server 10 via the communication network NW3. The coordination notification command includes the coordination ID and the scanner ID. The coordination ID and the scanner ID are data received from the scanner module 90.

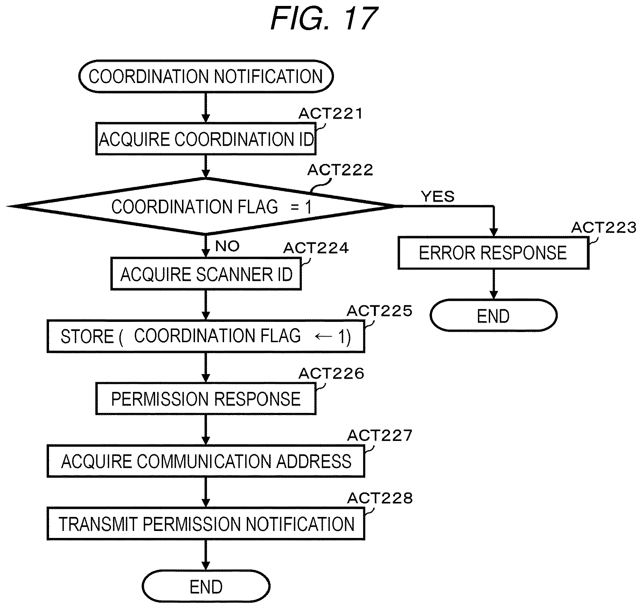

The processor 11 of the coordination server 10 receiving the coordination notification command via the second communication interface 15 starts information processing in the order illustrated in the flowchart of FIG. 17. That is, the processor 11 acquires the coordination ID from the coordination notification command in ACT 221. Hereinafter, this coordination ID is referred to as the acquired coordination ID. In ACT 222, the processor 11 retrieves the terminal coordination table 17 and determines whether the coordination flag in the same row as the row of the acquired coordination ID is set to "1."

When the coordination flag is set to "1," the processor 11 determines YES in ACT 222 and the process proceeds to ACT 223. In ACT 223, the processor 11 controls the second communication interface 15 such that an error response command is transmitted to the store server 30 which is the transmission source of the coordination notification command. Through this control, the error response command is transmitted from the second communication interface 15. The error response command is received by the router 80 via the communication network NW3 and is further received by the store server 30 via the in-store network NW2.

When the coordination flag is set to "0," the processor 11 determines NO in step ACT 222 and the process proceeds to ACT 224. In ACT 224, the processor 11 acquires the scanner ID from the coordination notification command. In ACT 225, the processor 11 stores the scanner ID in the field of the scanner ID in the same row as the row of the acquired coordination ID of the terminal coordination table 17. The processor 11 changes the coordination flag in the same row as the row of the acquired coordination ID from "0" to "1."

In ACT 226, the processor 11 controls the second communication interface 15 such that a permission response command is transmitted to the store server 30 which is the transmission source of the coordination notification command. Through this control, the permission response command is transmitted from the second communication interface 15. The permission response command is received by the router 80 via the communication network NW3 and is further received by the store server 30 via the in-store network NW2.

In ACT 227, the processor 11 acquires a communication address from the field of the same row as the row of the acquired coordination ID of the terminal coordination table 17. In ACT 228, the processor 11 controls the first communication interface 14 such that the permission notification command is transmitted using the communication address as a destination. Through this control, the permission notification command is wirelessly transmitted from the first communication interface 14. The permission notification command is received by the wireless device 24 of the information terminal 20 in which the communication address which is the destination is set via the wide area network NW1. Then, the processor 11 of the coordination server 10 ends the process of receiving the coordination notification command.

FIG. 23 is referred back to for description.

The processor 31 of the store server 30 controlling the transmission of the coordination notification command waits for a response command from the coordination server 10 in ACT 306. When the permission response command is received via the first communication interface 14, the processor 31 determines YES in ACT 306 and the process proceeds to ACT 307.

In ACT 307, the processor 31 changes the operation flag in the same row as the row of the acquired scanner ID of the scanner management table 36 from "0" to "1." In ACT 308, the processor 31 acquires the virtual POS No. of the virtual POS application from the virtual POS server 40. In ACT 309, the processor 31 stores the virtual POS No. in the field of the same row as the row of the acquired scanner ID of the scanner management table 36.

In ACT 310, the processor 31 controls the communication interface 34 such that a registration start notification command is transmitted to the virtual POS server 40. Through this control, the registration start notification command is transmitted from the communication interface 34 to the virtual POS server 40. The registration start notification command is received by the virtual POS server 40 via the in-store network NW2. The registration start notification command includes the virtual POS No. The virtual POS No. is acquired in the process of ACT 308.

Then, the processor 31 ends the process of receiving the scanned data of the coordination ID. When the operation flag is set to "1" in ACT 304 or the error response command is received in ACT 306, the processor 31 ends the reception process as an error.

When the registration start notification command is received via the communication interface 44, the processor 41 of the virtual POS server 40 starts information processing in the order illustrated in the flowchart of FIG. 27. That is, in ACT 401, the processor 41 acquires the virtual POS No. from the registration start notification command. In ACT 402, the processor 41 initializes one transaction file 47. Specifically, the processor 41 puts the virtual POS No. acquired in ACT 401 in an area of the virtual POS No. of the transaction file 47. The processor 41 clears the area of the purchase list and the area of the accounting code of the transaction file 47. Then, the processor 41 ends the process of receiving the registration start notification command.

FIG. 11 is referred back to for description.

The processor 21 of the information terminal 20 displaying the code symbol CD1 of the coordination ID on the touch panel 25 waits for the permission notification command in ACT 107. When the permission notification command is received via the wireless device 24, the processor 21 determines YES in ACT 107 and the process proceeds to ACT 108. In ACT 108, the processor 21 displays a shopping start screen SC2 (see FIG. 31) on the touch panel 25.

FIG. 32 illustrates one display example of the shopping start screen SC2. As illustrated in FIG. 32, the shopping start screen SC2 includes a message M2 for guiding the consumer to start shopping because of success of the scanning of the code symbol CD1 indicating the coordination ID and a message M3 for guiding the consumer to scan a barcode of a purchase commodity using the scanner module 90 of the cart C in shopping.

The consumer checking the shopping start screen SC2 starts the shopping after putting the information terminal 20 on the stand 200 of the cart C. The processor 21 of the information terminal 20 displays the shopping start screen SC2 for a predetermined time (for example, 5 seconds), and then displays a registration screen in an initial state in ACT 109. On the registration screen, a purchase list of purchase commodities of which barcodes are scanned using the scanner module 90 of the cart C is displayed. The registration screen in the initial state shows a state in which the purchase commodities are not yet registered in the purchase list (see FIG. 33 for details of the registration screen).

The consumer holds the barcodes of the commodities to be purchased to the reading window 91 of the scanner module 90 and placed the now registered commodities into a shopping basket SB. Through this operation, the data of the barcodes is transmitted, along with the scanner ID, to the store server 30 via the in-store network NW4 and the in-store network NW2.

When the data transmitted from the scanner module 90 is received via the communication interface 34, the processor 31 of the store server 30 starts information processing in the order illustrated in the flowchart of FIG. 23. That is, in ACT 301, the processor 31 analyzes the received data. In ACT 302, the processor 31 determines whether the received data includes the data of the coordination ID. In this case, since the received data does not include the data of the coordination ID, the processor 31 determines NO in ACT 302 and the process proceeds to ACT 311.

In ACT 311, the processor 31 determines whether the received data includes the data of the commodity ID. In this case, since the received data includes the data of the commodity ID, the processor 31 determines YES in ACT 311 and the process proceeds to ACT 312.

In ACT 312, the processor 31 acquires the scanner ID from the received data. Hereinafter, the scanner ID is referred to as the acquired scanner ID. In ACT 313, the processor 31 examines the operation flag in the same row as the row of the acquired scanner ID of the scanner management table 36.

When the operation flag is set to "1," the processor 31 determines YES in ACT 313 and the process proceeds to ACT 314. In ACT 314, the processor 31 acquires the virtual POS No. in the same row as the row of the acquired scanner ID of the scanner management table 36. The processor 31 controls the first communication interface 14 such that a registration request command is transmitted to the virtual POS server 40. Through this control, the registration request command is transmitted from the first communication interface 14 to the virtual POS server 40. The registration request command is received by the virtual POS server 40 via the in-store network NW2. The registration request command includes the commodity ID and the virtual POS No. The commodity ID is included in the received data from the scanner module 90. The virtual POS No. is acquired in the process of ACT 314.

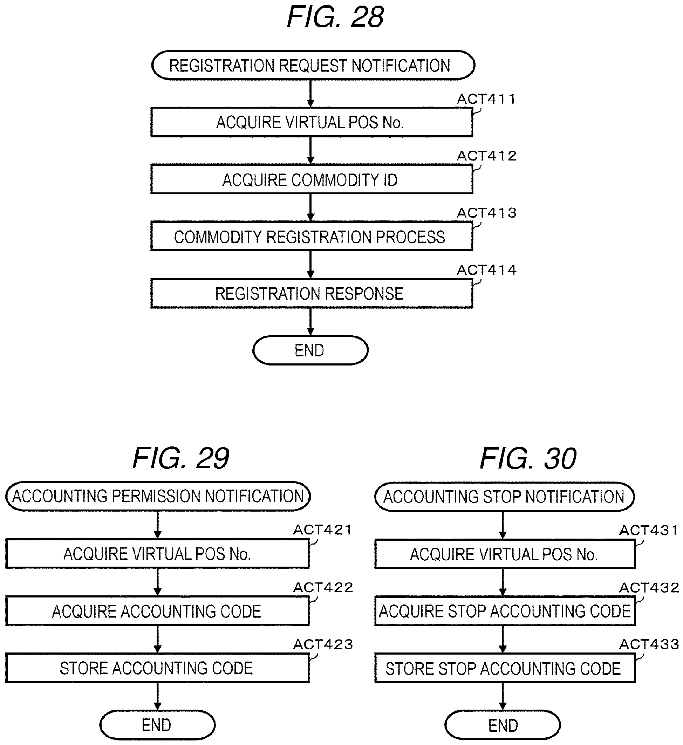

When the registration request command is received via the communication interface 44, the processor 41 of the virtual POS server 40 starts information processing in the order illustrated in the flowchart of FIG. 28. That is, in ACT 411, the processor 41 acquires the virtual POS No. from the registration request command. In ACT 412, the processor 41 acquires the commodity ID from the registration request command. In ACT 413, the processor 41 performs a commodity registration process. Specifically, the processor 41 reads the commodity data such as a unit price, a commodity name, and the like of a commodity specified with the commodity ID from the commodity file 46. The processor 41 generates a purchase commodity record including the commodity ID, the commodity name, and the price. The processor 41 adds the purchase commodity record to the purchase list of the transaction file 47 in which the virtual POS No. is set.

When the commodity registration process ends in this way, the processor 41 controls the communication interface 44 in ACT 414 such that a registration response command is transmitted to the store server 30. Through this control, the registration response command is transmitted from the communication interface 44 to the store server 30. The registration response command is received by the store server 30 via the in-store network NW2. The registration response command includes data of the transaction file 47 to which the purchase commodity record is added in ACT 413.

FIG. 23 is referred back to for description.

The processor 31 of the store server 30 controlling the transmission of a registration request notification command waits for the registration response command in ACT 316. When the registration response command is received via the communication interface 34, the processor 31 determines YES in ACT 316 and the process proceeds to ACT 317. In ACT 317, the processor 31 acquires the purchase list from the data of the transaction file 47 included in the registration response command. In ACT 318, the processor 31 controls the communication interface 34 such that a registration notification command is transmitted to the coordination server 10. Through this control, the registration notification command is transmitted from the communication interface 34 to the coordination server 10. The registration notification command is received by the coordination server 10 via the communication network NW3. The registration notification command includes the scanner ID and the purchase list. The scanner ID is the scanner ID acquired in the process of ACT 312. The purchase list is the purchase list acquired in the process of ACT 317.

Then, the processor 31 ends the process of receiving the scanned data of the commodity ID. When the operation flag is set to "0" in ACT 313, the processor 31 ends the reception process as an error.

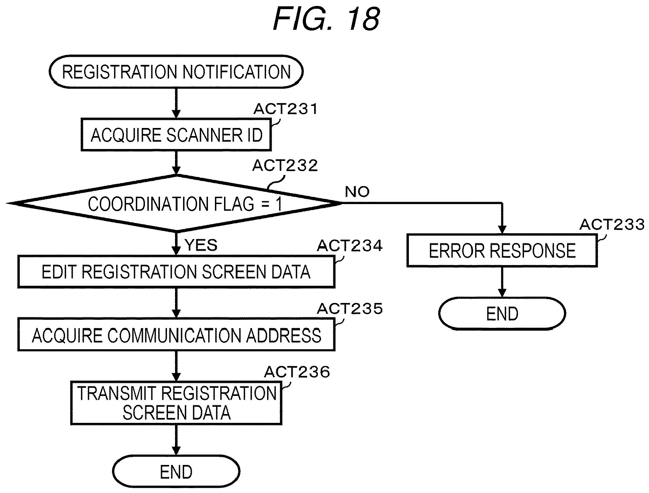

When the registration notification command is received via the second communication interface 15, the processor 11 of the coordination server 10 starts information processing in the order illustrated in the flowchart of FIG. 18. That is, in ACT 231, the processor 11 acquires the scanner ID from the registration notification command. The scanner ID is referred to as the acquired scanner ID. In ACT 232, the processor 11 examines the coordination flag in the same row as the row of the acquired scanner ID of the terminal coordination table 17.

Here, when the coordination flag is set to "0," the processor 11 determines NO in ACT 232 and the process proceeds to ACT 233. In ACT 233, the processor 11 controls the second communication interface 15 such that an error response command is transmitted to the store server 30 which is the transmission source of the registration notification command. Through this control, the error response command is transmitted from the second communication interface 15. The error response command is received by the router 80 via the communication network NW3 and is further received by the store server 30 via the in-store network NW2.

When the coordination flag is set to "1," the processor 11 determines YES in step ACT 232 and the process proceeds to ACT 234. In ACT 234, the processor 11 edits the registration screen data based on the data of the purchase list included in the registration notification command. In ACT 235, the processor 11 acquires the communication address in the same row as the row of the acquired scanner ID from the terminal coordination table 17. In ACT 236, the processor 11 controls the first communication interface 14 such that the registration screen data is transmitted using the communication address as a destination. Through this control, the registration screen data is transmitted from the first communication interface 14. The registration screen data is received by the information terminal 20 in which the communication address which is the destination is set via the wide area network NW1.

FIG. 11 is referred back to for description.

The processor 21 of the information terminal 20 displaying the shopping start screen SC2 waits for the registration screen data in ACT 109. When the registration screen data is received via the wireless device 24, the processor 21 determines YES in ACT 109 and the process proceeds to ACT 110. In ACT 110, the processor 21 displays the registration screen SC3 (see FIG. 33) on the touch panel 25 based on the registration screen data.

FIG. 33 illustrates one display example of the registration screen SC3. As illustrated, an accounting button BT1 is displayed along with a purchase list LS1 on the registration screen SC3. In the purchase list LS1, a list of commodities names and prices of the commodities registered for sale, a total score, a total price, and the like are displayed. The accounting button BT1 is a button image used for a touch operation in order for the consumer finishing the shopping to give an accounting instruction.

The processor 21 of the information terminal 20 displaying the registration screen SC1 determines whether the accounting button BT1 is touched in ACT 111. When the accounting button BT1 is not touched, the processor 21 determines NO in ACT 111 and the process proceeds to ACT 112. The processor 21 determines whether a subsequent registration screen data is received in ACT 112. When the subsequent registration screen data is not received, the processor 21 determines NO in ACT 112 and the process returns to ACT 111. Here, the processor 21 waits for touching the accounting button BT1 or receiving the subsequent registration screen data in ACT 111 and ACT 112.

When the subsequent registration screen data is received in the waiting state, the processor 21 determines YES in ACT 112 and the process proceeds to ACT 110. That is, the processor 21 updates the registration screen SC3 displayed on the touch panel 25 based on the registration screen data. The processor 21 returns to the waiting state of ACT 111 and ACT 112.

When it is detected that the accounting button BT1 is touched in the waiting state, the processor 21 determines YES in ACT 111 and the process proceeds to ACT 121 of FIG. 12. In ACT 121, the processor 21 acquires the coordination ID stored in the main memory 22 or the auxiliary storage device 23. In ACT 122, the processor 21 controls the wireless device 24 such that the accounting instruction command is transmitted to the coordination server 10. Through this control, the accounting instruction command is wirelessly transmitted from the wireless device 24. The accounting instruction command is received by the coordination server 10 via the wide area network NW1. The accounting instruction command includes the communication address of the information terminal 20 and the coordination ID acquired in ACT 121.

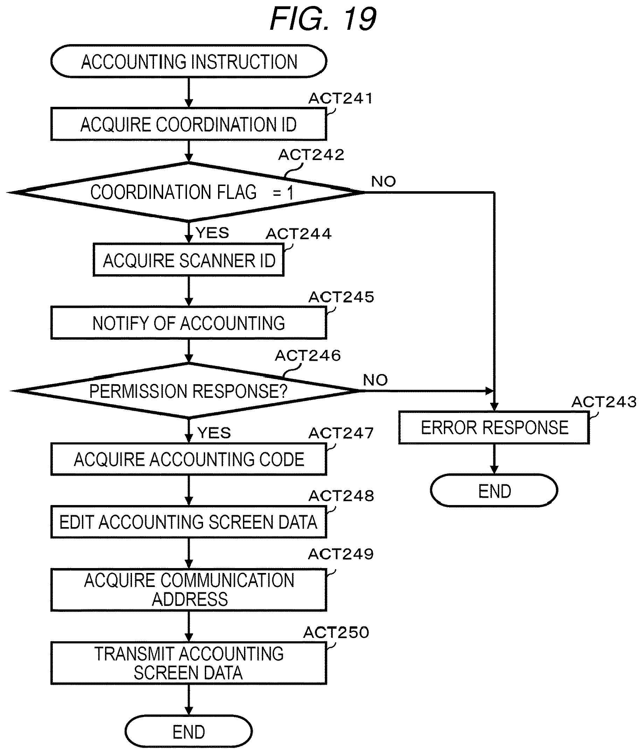

When the accounting instruction command is received via the first communication interface 14, the processor 11 of the coordination server 10 starts information processing in the order illustrated in the flowchart of FIG. 19. That is, in ACT 241, the processor 11 acquires the coordination ID from the accounting instruction command. Hereinafter, the coordination ID is referred to as the acquired coordination ID. The processor 11 examines the coordination flag in the same row as the row of the acquired coordination ID of the terminal coordination table 17.

Here, when the coordination flag is not set to "1," the processor 11 determines NO in ACT 242 and the process proceeds to ACT 243. In ACT 243, the processor 11 controls the first communication interface 14 such that the error response command is transmitted to the information terminal 20 which is the transmission source of the accounting instruction command. Through this control, the error response command is transmitted from the first communication interface 14. The error response command is received by the information terminal 20 which is the transmission source of the accounting instruction command via the wide area network NW1.

When the coordination flag is set to "1," the processor 11 determines YES in step ACT 242 and the process proceeds to ACT 244. In ACT 244, the processor 11 acquires the scanner ID from the same row as the row of the acquired coordination ID of the terminal coordination table 17. In ACT 245, the processor 11 controls the second communication interface 15 such that the accounting notification command is transmitted to the store server 30. Through this control, the accounting notification command is transmitted from the second communication interface 15 to the store server 30. The accounting notification command is received by the router 80 via the communication network NW3 and is further received by the store server 30 via the in-store network NW2. The accounting notification command includes the scanner ID. The scanner ID is acquired in the process of ACT 244.

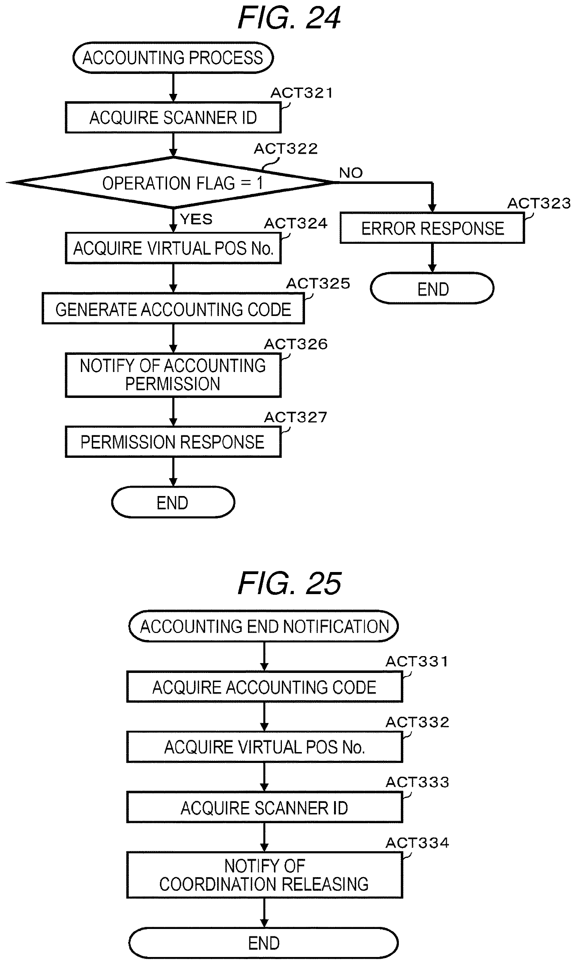

When the accounting notification command is received, the processor 31 of the store server 30 starts information processing in the order illustrated in the flowchart of FIG. 24. That is, in ACT 321, the processor 31 acquires the scanner ID from the accounting notification command. Hereinafter, the scanner ID is referred to as the acquired scanner ID. In ACT 322, the processor 31 examines the operation flag in the same row as the row of the acquired scanner ID of the scanner management table 36.

Here, when the operation flag is set to "0," the processor 31 determines NO in ACT 322 and the process proceeds to ACT 323. In ACT 323, the processor 31 controls the communication interface 34 such that an error response command is transmitted to the coordination server 10 which is the transmission source of the accounting notification command. Through this control, the error response command is transmitted from the communication interface 34 to the coordination server 10. The error response command is received by the router 80 via in-store network NW2 and is further received by the coordination server 10 via the communication network NW3.

When the operation flag is set to "1," the processor 31 determines YES in step ACT 322 and the process proceeds to ACT 324. In ACT 324, the processor 31 acquires the virtual POS No. from the field of the same row as the row of the acquired scanner ID of the scanner management table 36. In ACT 325, the processor 31 generates a new accounting code.

In ACT 326, the processor 31 controls the first communication interface 14 such that the accounting permission notification command is transmitted to the virtual POS server 40. Through this control, the accounting permission notification command is transmitted from the first communication interface 14 to the virtual POS server 40. The accounting permission notification command is received by the virtual POS server 40 via the in-store network NW2. The accounting permission notification command includes the virtual POS No. and the accounting code. The virtual POS No. is acquired in the process of ACT 324. The accounting code is generated in the process of ACT 325.

When the accounting permission notification command is received, the processor 41 of the virtual POS server 40 starts information processing in the order illustrated in the flowchart of FIG. 29. That is, in ACT 421, the processor 41 acquires the virtual POS No. from the accounting permission notification command. In ACT 422, the processor 41 acquires the accounting code from the accounting permission notification command. In ACT 423, the processor 41 stores the accounting code in the transaction file 47 in which the virtual POS No. is set.

FIG. 24 is referred back to for description.

The processor 31 of the store server 30 controlling the transmission of the accounting permission notification command controls the communication interface 34 such that the permission response command is transmitted to the coordination server 10 in ACT 327. Through this control, the permission response command is transmitted from the communication interface 34 to the coordination server 10. The permission response command is received by the router 80 via the in-store network NW2 and is further received by the coordination server 10 via the communication network NW3. The permission response command includes the accounting code. The accounting code is generated in the process of ACT 325.

FIG. 19 is referred back to for description.

The processor 11 of the coordination server 10 controlling the transmission of the accounting notification command determines whether the permission response command is received in ACT 246. When the error response command is received other than the permission response command, the processor 11 determines NO in ACT 246 and the process proceeds to ACT 243 described above.

When the permission response command is received, the processor 11 determines YES in ACT 246 and the process proceeds to ACT 247. In ACT 247, the processor 11 acquires the accounting code from the permission response command. In ACT 248, the processor 11 edits the accounting screen data including the accounting code.

In ACT 249, the processor 11 acquires the communication address from the field of the same row as the row of the acquired scanner ID of the terminal coordination table 17. The processor 11 controls the first communication interface 14 such that the accounting screen data is transmitted to the information terminal 20 in which the communication address is set. Through this control, the accounting screen data is transmitted from the first communication interface 14. The accounting screen data is received by the information terminal 20 in which the communication address is set via the wide area network NW1.

FIG. 12 is referred back to for description.

The processor 21 of the information terminal 20 controlling the transmission of the accounting instruction command waits for the accounting screen data in ACT 123. When the accounting screen data is received via the wireless device 24, the processor 21 determines YES in ACT 123 and the process proceeds to ACT 124. In ACT 124, the processor 21 displays an accounting screen SC4 (see FIG. 34) on the touch panel 25.

FIG. 34 illustrates one display example of the accounting screen SC4. As illustrated in FIG. 34, a barcode CD2 equivalent to the accounting code is displayed on the accounting screen SC4. A message M4 for giving an instruction to scan the barcode CD2 using a scanner of an accounting machine is displayed.

The consumer checking the accounting screen SC4 moves to a location where the self-accounting machine 50 or the manned accounting machine 60 is installed. For example, the consumer moving to the location where the self-accounting machine 50 is installed uses the scanner of the self-accounting machine 50 to read the barcode BC2 of the accounting screen SC4. Then, the transaction file 47 in which the accounting code of the barcode BC2 is set is sent from the virtual POS server 40 to the self-accounting machine 50. Thereafter, the consumer pays by cash or a credit card in the self-accounting machine 50 so that a known accounting process such as electronic money payment is performed. When the accounting process ends, an accounting end notification command is transmitted from the self-accounting machine 50 to the store server 30. The accounting end notification command includes an accounting code of the barcode BC2.

For example, the consumer moving to the location where the manned accounting machine 60 is installed shows the accounting screen SC4 to a store staff. The store staff uses the scanner of the manned accounting machine 60 to read the barcode BC2 of the accounting screen SC4. Then, the transaction file 47 in which the accounting code of the barcode BC2 is set is sent from the virtual POS server 40 to the manned accounting machine 60. Thereafter, the consumer pays by cash or a credit card in the manned accounting machine 60 so that a known accounting process such as electronic money payment is performed. For example, the registered commodities are corrected as necessary. When the accounting process ends, the accounting end notification command is transmitted from the manned accounting machine 60 to the store server 30. The accounting end notification command includes the accounting code of the barcode BC2.

When the accounting end notification command is received, the processor 31 of the store server 30 starts information processing in the order illustrated in the flowchart of FIG. 25. That is, in ACT 331, the processor 31 acquires the accounting code from the accounting end notification command. In ACT 332, the processor 31 inquires of the virtual POS server 40 and acquires the virtual POS No. stored in the transaction file 47 along with the accounting code. Hereinafter, the virtual POS No. is referred to as the acquired virtual POS No.

In ACT 333, the processor 31 acquires the scanner ID from the field of the same row as the row of the acquired virtual POS No. of the scanner management table 36. Then, the processor 31 controls the communication interface 34 such that a coordination releasing notification command is transmitted to the coordination server 10. Thus, the coordination releasing notification command is transmitted from the communication interface 34 to the coordination server 10. The coordination releasing notification command is received by the router 80 via the in-store network NW2 and is further received by the coordination server 10 via the communication network NW3. The coordination releasing notification command includes the scanner ID. The scanner ID is acquired in the process of ACT 333.

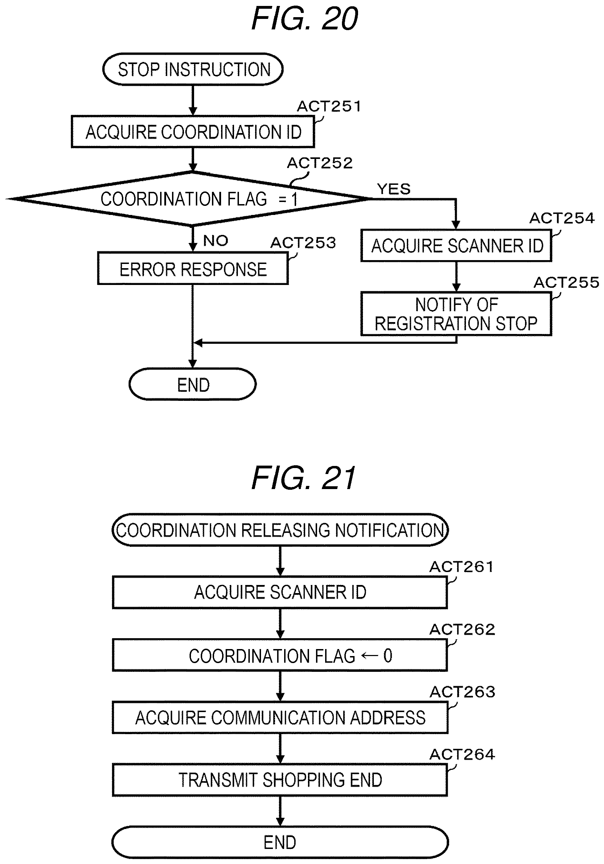

When the coordination releasing notification command is received, the processor 11 of the coordination server 10 starts information processing in the order illustrated in the flowchart of FIG. 21. In ACT 261, the processor 11 acquires the scanner ID from the coordination releasing notification command. Hereinafter, the scanner ID is referred to as the acquired scanner ID. In ACT 262, the processor 11 changes the coordination flag in the same row as the row of the acquired scanner ID of the terminal coordination table 17 from "1" to "0."

In ACT 263, the processor 11 acquires the communication address from the field of the same row as the row of the acquired scanner ID of the terminal coordination table 17. In ACT 264, the processor 11 controls the first communication interface 14 such that a shopping end command is transmitted using the communication address as a destination. Through this control, the shopping end command is transmitted from the first communication interface 14. The shopping end command is received by the information terminal 20 in which the communication address which is the destination is set via the wide area network NW1.

FIG. 12 is referred back to for description.

In ACT 125, the processor 21 of the information terminal 20 displaying the accounting screen SC4 waits for the accounting end command. When the accounting end command is received via the wireless device 24, the processor 21 determines YES in ACT 125 and the process proceeds to ACT 126. In ACT 126, the processor 21 erases the accounting screen SC4 displayed on the touch panel 25. In ACT 127, the processor 21 clears the coordination ID stored in the main memory 22 or the auxiliary storage device 23. Then, the processor 21 ends the information processing in accordance with the shopping support program 29.

As apparent from the description of the foregoing operations, the commodity sales processing system according to the embodiment includes the coordination server 10 serving as the first server, and the store server 30 and the virtual POS server 40 serving as the second server. The coordination server 10 performs data communication with the information terminal 20 owned by the consumer via the wide area network NW1 which is the first network. The store server 30 and the virtual POS server 40 perform data communication with the code reading device owned by the store, that is, the scanner module 90, via the in-store network NW2 and the in-store network NW4 which are the second network.

The processor 11 of the coordination server 10 functions as the association unit by performing the processes of ACT 221 to ACT 225 of FIG. 17. That is, the processor 11 associates the coordination ID which is the first intrinsic code set in the information terminal 20 owned by a consumer before the consumer starts shopping in a store with the scanner ID which is the second intrinsic code set in the scanner module 90. Specifically, the processor 11 associates the coordination ID with the scanner ID based on data transmitted to the store server 30 from the scanner module 90 reading the code symbol CD1 of the coordination ID displayed on a display device (the touch panel 25) of the information terminal 20.

The processor 31 of the store server 30 and the processor 41 of the virtual POS server 40 functions as the processing unit by performing the processes of ACT 311 to ACT 315 of FIG. 23 and the processes of ACT 411 to ACT 414 of FIG. 28. That is, the processors 31 and 41 process sales data of commodities identified with the commodity codes read by the scanner module 90.

The processor 31 of the store server 30 and the processor 11 of the coordination server 10 function as the transmission unit by performing the processes of ACT 316 to ACT 318 of FIG. 23 and the processes of ACT 231 to ACT 236 (excluding ACT 233) of FIG. 18. That is, the processors 31 and 11 transmit the image data which is based on the sales data of the commodities processed by the processing unit to the information terminal 20 of the coordination ID associated with the scanner ID of the scanner module 90 reading the commodity codes.

Further, the processor 31 of the store server 30 and the processor 11 of the coordination server 10 function as the releasing unit by performing the processes of ACT 331 to ACT 334 of FIG. 25 and the processes of ACT 261 to ACT 264 of FIG. 21. That is, the processors 31 and 11 release the association between the coordination ID and the scanner ID in response to settlement of a transaction which is based on the sales data of the commodities processed by the processing unit.

In the commodity sales processing system that has the configuration, the consumer performs an operation of reading the barcodes of the purchase commodities using the scanner module 90 mounted on the cart C. The scanner module 90 is designed to read barcodes of commodities. Accordingly, operability is good. For example, even when a commodity is large, the consumer can read a barcode holding the commodity with both hands. Accordingly, operability is satisfactory.

On the other hand, the registration screen showing a registration result of commodities is displayed on the touch panel 25 of the information terminal 20 owned by the consumer. In recent years, Internet shopping in which the information terminal 20 such as a smartphone is used has widely gained popularity, and thus the information terminal 20 is appropriate as a user interface of the consumer. In the embodiment, since the information terminal 20 is used as a user interface other than an operation of reading barcodes of commodities, the consumer can easily use the information terminal 20. Further, from the viewpoint of a store side, it is unnecessary to provide a display device in the cart C. Therefore, there is the advantage capable of reducing initial facility investment.

According to the embodiment, since the information terminal 20 owned by the consumer is used, it is possible to obtain the advantage capable of omitting a check-in operation when the consumer enters the store compared to a system in which a cart terminal is used.

The information terminal 20 communicates with the coordination server 10 via the wide area network NW1. Accordingly, the information terminal 20 owned by the consumer is not directly connected to the in-store network NW2 or the in-store network NW4. Accordingly, since the consumer cannot access the store server 30 or the like illegally, it is possible to obtain the advantage that security is excellent.

Next, releasing of the association between the information terminal 20 (the coordination ID) and the scanner module 90 (the scanner ID) when an accounting process is not performed will be described.

The commodity sales processing system according to the embodiment releases the association between the information terminal 20 and the scanner module 90 based on detection when it is detected that no power is fed to the information terminal 20 from the charging connection unit 201 provided on the stand 200 after start of shopping. For example, when the consumer checks the shopping start screen SC2 and starts the shopping in the store but stops the shopping due to no target commodities or the consumer does not perform an accounting process during the shopping and stops the shopping despite the fact that there are registered purchase commodities, the consumer takes the information terminal 20 put on the stand 200 to move. That is, since the connection (a charging cable) between the chargeable terminal of the information terminal 20 (the power unit 26) and the charging connection unit 201 is disconnected or the charging pad (the wireless charger) is separated, the feeding of the power is stopped and the chargeable state is canceled. In this case, the commodity sales processing system releases the association between the information terminal 20 and the scanner module 90. Thus, even when another consumer uses the cart C (the scanner module 90) used by the consumer performing no accounting process, wrong association cannot continue.

In ACT 112 of FIG. 11, the information terminal 20 performs a state determination process during the shopping. In the commodity sales processing system according to the embodiment, the information terminal 20 is assumed to perform any of state determination processes (1) to (3).

First, the state determination process (1) in the flowchart of FIG. 13 will be described.

The processor 21 determines YES in ACT 131 and continues the shopping when the power unit 26 notifies the processor 21 of the chargeable state. When the power unit 26 notifies the processor 21 that the chargeable state is released and the chargeable state is canceled, the processor 21 determines NO in ACT 131 and acquires the coordination ID stored in the main memory 22 or the auxiliary storage device 23. In ACT 132, the processor 21 controls the wireless device 24 such that a stop instruction command is transmitted to the coordination server 10. Through this control, the stop instruction command is wirelessly transmitted from the wireless device 24. The stop instruction command is received by the coordination server 10 via the wide area network NW1. The stop instruction command incudes the communication address of the information terminal 20 and the coordination ID acquired in ACT 132.

When the stop instruction command is received via the first communication interface 14, the processor 11 of the coordination server 10 starts information processing in the order illustrated in the flowchart of FIG. 20. That is, in ACT 251, the processor 11 acquires the coordination ID from the stop instruction command. Hereinafter, the coordination ID is referred to as the acquired coordination ID. The processor 11 examines the coordination flag in the same row as the row of the acquired coordination ID of the terminal coordination table 17.

Here, when the coordination flag is not set to "1," the processor 11 determines NO in ACT 252 and the process proceeds to ACT 253. In ACT 253, the processor 11 controls the first communication interface 14 such that the error response command is transmitted to the information terminal 20 which is the transmission source of the stop instruction command. Through this control, the error response command is transmitted from the first communication interface 14. The error response command is received by the information terminal 20 which is the transmission source of the stop instruction command via the wide area network NW1.

When the coordination flag is set to "1," the processor 11 determines YES in step ACT 252 and the process proceeds to ACT 254. In ACT 244, the processor 11 acquires the scanner ID from the same row as the row of the acquired coordination ID of the terminal coordination table 17. In ACT 255, the processor 11 controls the second communication interface 15 such that a registration stop command is transmitted to the store server 30. Through this control, the registration stop command is transmitted from the second communication interface 15 to the store server 30. The registration stop command is received by the router 80 via the communication network NW3 and is further received by the store server 30 via the in-store network NW2. The registration stop command includes the scanner ID. The scanner ID is acquired in the process of ACT 254.

When the registration stop command is received, the processor 31 of the store server 30 starts information processing in the order illustrated in the flowchart of FIG. 26. That is, in ACT 341, the processor 31 acquires the scanner ID from the accounting notification command. Hereinafter, the scanner ID is referred to as the acquired scanner ID. In ACT 342, the processor 31 examines the operation flag in the same row as the row of the acquired scanner ID of the scanner management table 36.

Here, when the operation flag is set to "0," the processor 31 determines NO in ACT 342 and the process proceeds to ACT 343. In ACT 343, the processor 31 controls the communication interface 34 such that an error response command is transmitted to the coordination server 10 which is the transmission source of the registration stop command. Through this control, the error response command is transmitted from the communication interface 34 to the coordination server 10. The error response command is received by the router 80 via the in-store network NW2 and is further received by the coordination server 10 via the communication network NW3.

When the operation flag is set to "1," the processor 31 determines YES in step ACT 342 and the process proceeds to ACT 344. In ACT 344, the processor 31 acquires the virtual POS No. from the field of the same row as the row of the acquired scanner ID of the scanner management table 36. In ACT 345, the processor 31 generates a stop accounting code corresponding to the accounting stop.

In ACT 346, the processor 31 controls the first communication interface 14 such that the accounting stop notification command is transmitted to the virtual POS server 40. Through this control, the accounting stop notification command is transmitted from the first communication interface 14 to the virtual POS server 40. The accounting stop notification command is received by the virtual POS server 40 via the in-store network NW2. The accounting stop notification command includes the virtual POS No. and the stop accounting code. The virtual POS No. is acquired in the process of ACT 344. The stop accounting code is generated in the process of ACT 345.

When the accounting stop notification command is received, the processor 41 of the virtual POS server 40 starts information processing in the order illustrated in the flowchart of FIG. 30. That is, in ACT 431, the processor 41 acquires the virtual POS No. from the accounting permission notification command. In ACT 432, the processor 41 acquires the stop accounting code from the accounting stop notification command. In ACT 433, the processor 41 stores the stop accounting code in the transaction file 47 in which the virtual POS No. is set. That is, since the consumer stops the shopping during the shopping, the accounting process is not performed on the commodities registered in the transaction file 47.

FIG. 26 is referred back to for description.

The processor 31 of the store server 30 controlling the transmission of the accounting stop notification command controls the communication interface 34 such that a coordination releasing permission response command is transmitted to the coordination server 10 in ACT 347. Through this control, the coordination releasing notification command is transmitted from the communication interface 34 to the coordination server 10. The coordination releasing notification command is received by the router 80 via the in-store network NW2 and is further received by the coordination server 10 via the communication network NW3. The coordination releasing notification command includes the scanner ID. The scanner ID is acquired in the process of ACT 341.

When the coordination releasing notification command is received, the processor 11 of the coordination server 10 starts information processing in the order illustrated in the flowchart of FIG. 21. Since a process after the reception of the coordination releasing notification command by the coordination server 10 is performed as in the case in which the above-described accounting process is completed, the description will be omitted.

The processor 21 of the information terminal 20 after the transmission of the registration end instruction command waits for an accounting end command in ACT 125. When the accounting end command is received via the wireless device 24, the processor 21 erases the accounting screen SC4 displayed on the touch panel 25 and clears the coordination ID stored in the main memory 22 or the auxiliary storage device 23. Then, the processor 21 ends the information processing in accordance with the shopping support program 29.

In the commodity sales processing system according to the embodiment, as apparent from the description of the foregoing operations, the association between the information terminal 20 and the scanner module 90 can be released when it is detected that the chargeable state is released through the state determination process (1) in the information terminal 20. Accordingly, thereafter, even when another consumer uses the same scanner module 90 (the cart C), no commodity is registered in association with the previous consumer. Thus, the information terminal 20 owned by the consumer can be appropriately used.

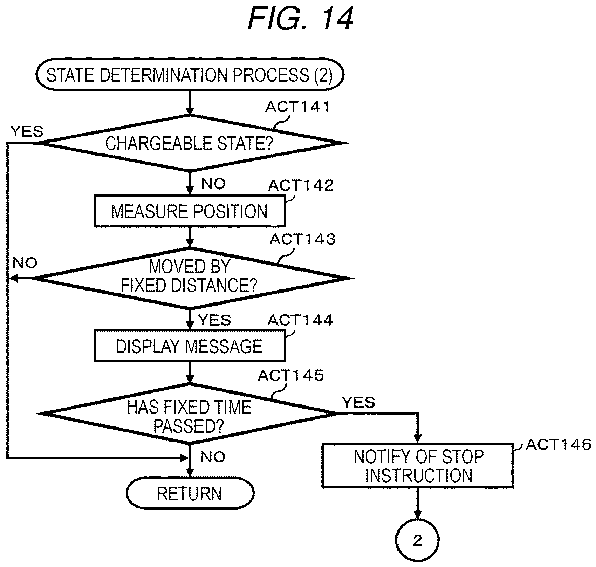

Next, the state determination process (2) illustrated in the flowchart of FIG. 14 will be described.

In the above-described state determination process (1), when it is detected that the information terminal is not in the chargeable state, the association between the information terminal 20 and the scanner module 90 is released. However, in the state determination process (2), the association is released when the information terminal 20 is moved by a certain distance from a position at which it is detected that the information terminal is not in the chargeable state.

In ACT 141, the processor 21 determines YES and allows the shopping to continue when the power unit 26 notifies the processor 21 that the information terminal 20 is in the chargeable state. The processor 21 determines NO in ACT 141 and measures a position in ACT 142 when the chargeable state is canceled and the power unit 26 notifies the processor 21 that the information terminal is not in the chargeable state. The processor 21 detects a speed, a traveling direction, and a movement distance of the information terminal 20 by autonomous inertial navigation based on data detected by the sensor group 27 and obtains a movement distance between a current position and a position at the time at which it is determined that the information terminal is not in the chargeable state. Since a method of obtaining the speed, the traveling direction, and the movement distance of the information terminal 20 based on the data detected by the sensor group 27 (an acceleration sensor, a gyro sensor (an azimuth sensor), and a magnetic sensor) is known, the description will be omitted.

When the movement distance is not equal to or greater than a preset certain distance, the processor 21 determines NO in ACT 143 and allows the shopping to continue. When the movement distance is equal to or greater than the preset distance, the processor 21 determines YES in ACT 143 and displays a warning message indicating that the association between the touch panel 25 and the scanner module 90 is released, that is, notifying the consumer that the commodities can be registered in ACT 143. The processor 21 measures a time passing after the warning message is displayed.

After the warning message is displayed, the processor 21 determines YES in ACT 143 and allows the shopping to continue while the preset certain time has not passed. Meanwhile, when the information terminal 20 is put on the stand 200 and enters the chargeable state, the processor 21 determines YES in ACT 141, ends the position measurement and the time measurement, and allows the shopping to continue.

While the preset certain time has not passed after the display of the warning message, the processor 21 determines YES in ACT 145 and acquires the coordination ID stored in the main memory 22 or the auxiliary storage device 23. In ACT 132, the processor 21 controls the wireless device 24 such that the stop instruction command is transmitted to the coordination server 10. Through this control, the stop instruction command is wirelessly transmitted from the wireless device 24.

Hereinafter, a similar process to the case of the above-described state determination process (1) is assumed to be performed and the description will be omitted.

In the commodity sales processing system according to the embodiment, as apparent from the description of the foregoing operations, the association between the information terminal 20 and the scanner module 90 is not released as long as the consumer does not move by the certain distance although the chargeable state of the information terminal 20 is canceled in the state determination process (2) in the information terminal 20. Accordingly, the consumer can pick up the information terminal 20 put on the stand 200 during the shopping to perform any applicable operation on the information terminal 20. After the consumer puts the information terminal 20 on the stand 200 again after completion of an operation on the information terminal 20, the consumer can continue the shopping. When the consumer picks up the information terminal 20 put on the stand 200 and moves by a certain distance in order to end the shopping, the association between the information terminal 20 and the scanner module 90 can be released although the consumer does not an operation of giving an instruction to end the shopping. Thus, it is possible to appropriately use the information terminal 20 owned by the consumer.

In the above-described state determination process (2), after the movement from the position at which the chargeable state is released by the certain distance, the stop instruction command is transmitted after the certain time has passed, but the stop instruction command may be transmitted based on other conditions. For example, the warning message is displayed when the consumer moves by a first certain distance. Thereafter, the stop instruction command is transmitted at the time of further movement of a second certain distance. A warning message is displayed when the chargeable state is canceled and the certain time has passed. Thereafter, when the consumer moves by the certain distance or the certain time has further passed, the stop instruction command is transmitted.

By transmitting the stop instruction command based on the conditions, the consumer can perform any applicable operation on the information terminal 20 during the shopping.

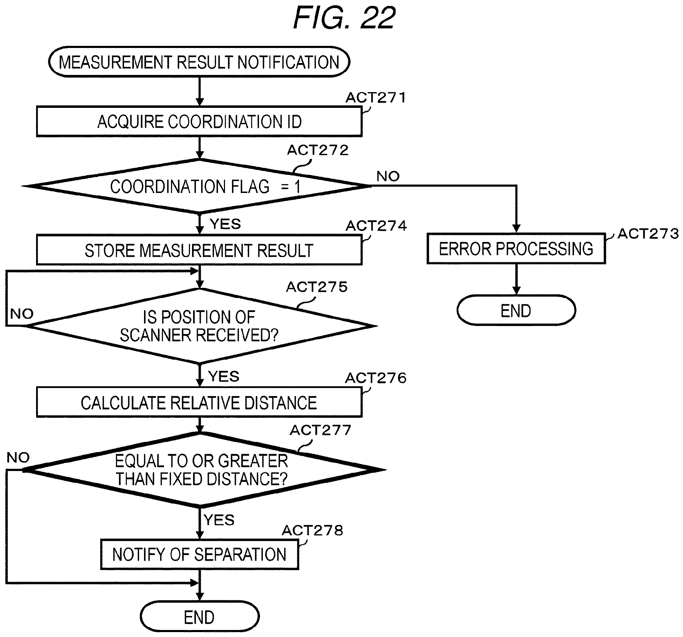

Next, the state determination process (3) illustrated in the flowchart of FIG. 15 will be described. FIG. 22 is a flowchart illustrating an order of a process of the coordination server 10 when the information terminal 20 performs the state determination process (3). When the information terminal 20 performs the state determination process (3), it is assumed that the scanner module 90 measures a position similarly to the information terminal 20 based on data detected by the sensor group 96 and transmits data of measured values (scanner position) to the coordination server 10 via the in-store network NW4 and the communication network NW3.

In the above-described state determination process (2), when the information terminal 20 is moved by the certain distance from a position at which the information terminal 20 is detected not to be in the chargeable state, the association between the information terminal 20 and the scanner module 90 is released. In the state determination process (3), however, the association is canceled when a relative distance between the information terminal 20 the scanner module 90 (cart C) is equal to or greater than the certain distance. For example, when the consumer picks up the information terminal 20 put on the stand 200 and operates the information terminal 20 while pushing the cart C and moving, the relative distance between the information terminal 20 and the scanner module 90 does not increase. When the consumer pushes the cart C and moves, there is a high possibility of the consumer intending to continue the shopping. Accordingly, in the state determination process (3), even when the consumers move by the certain distance or more determined in the state determination process (2) from the position at which the chargeable state is detected, the association between the information terminal 20 and the scanner module 90 is maintained as long as the relative distance between the information terminal 20 and the scanner module 90 is not the certain distance or more.

ACT 151, 152, and ACT 155 to 157 illustrated in FIG. 15 are similar processes to ACT 141, 142, and ACT 144 to 146 illustrated in FIG. 14, and thus the description will be omitted.

The processor 21 of the information terminal 20 controls the wireless device 24 such that a measurement result notification command including the coordination ID and the data indicating the measured values in the position measurement is transmitted to the coordination server 10. Through this control, the measurement result notification command is wirelessly transmitted from the wireless device 24. The measurement result notification command is received by the coordination server 10 via the wide area network NW1.

When the measurement result notification command is received via the first communication interface 14, the processor 11 of the coordination server 10 starts information processing in the order illustrated in the flowchart of FIG. 22. That is, in ACT 271, the processor 11 acquires the coordination ID from the measurement result notification command. Hereinafter, the coordination ID is referred to as the acquired coordination ID. The processor 11 examines the coordination flag in the same row as the row of the acquired coordination ID of the terminal coordination table 17.

Here, when the coordination flag is not set to "1," the processor 11 determines NO in ACT 272 and the process proceeds to ACT 273. In ACT 273, the processor 11 controls the first communication interface 14 such that an error response command is transmitted to the information terminal 20 which is the transmission source of the measurement result notification command. Through this control, the error response command is transmitted from the first communication interface 14. The error response command is received by the information terminal 20 which is the transmission source of an accounting instruction command via the wide area network NW1.

When the coordination flag is set to "1," the processor 11 determines YES in ACT 272 and the process proceeds to ACT 274. In ACT 274, the processor 11 stores the data indicating the measured values indicating the position of the information terminal 20 included in the measurement result notification command in the main memory 12 or the auxiliary storage device 13.

In ACT 275, the processor 11 waits for receiving the data of the measured values (scanner position) from the scanner module 90. The control unit 93 of the scanner module 90 continues measuring a position changed with movement of the cart C based on the data detected by the sensor group 96. The control unit 93 transmits the scanner ID along the position of the scanner indicating the position of the scanner module 90 to the coordination server 10 via the wireless unit 95.

When the data of the scanner position and the scanner ID are received from the scanner module 90 and YES is determined in ACT 275, the processor 21 of the information terminal 20 reads the data indicating the measured values indicating the position of the information terminal 20 received with the measurement result notification command along with the coordination ID corresponding to the scanner ID.

In ACT 276, the processor 21 calculates the relative distance between the information terminal 20 and the scanner module 90 based on the data indicating the position of the information terminal 20 and the data of the scanner position received from the information terminal 20.

When the relative distance is not equal to or greater than the preset certain distance, the processor 11 determines NO in ACT 277 and allows the shopping to continue. When the relative distance is equal to or greater than the certain distance, the processor 11 determines YES in ACT 278 and transmits separation notification to the information terminal 20 which is the transmission source of the measurement result notification command in ACT 278.

When the separation notification is received from the coordination server 10 and YES is determined in ACT 154, the processor 21 of the information terminal 20 displays a warning message to notify the consumer that the association between the touch panel 25 and the scanner module 90 is separated, that is, the commodities can be registered. The processor 21 performs measurement of a time which has passed after the warning message is displayed.

In the commodity sales processing system according to the embodiment, as apparent from the description of the foregoing operations, in the state determination process (3) of the information terminal 20, the association between the information terminal 20 and the scanner module 90 is not released as long as the information terminal 20 is not separated from the scanner module 90 by the certain distance or more although the chargeable state of the information terminal 20 is released. Accordingly, the consumer can pick up the information terminal 20 put on the stand 200 during the shopping and perform any applicable operation on the information terminal 20 while moving along with the cart C. When the consumer completes the operation on the information terminal 20 and then puts the information terminal 20 on the stand 200 again, the consumer can continue the shopping. When the consumer picks up the information terminal 20 put on the stand 200 and separates from the scanner module 90 by the certain distance or more in order to end the shopping, the association between the information terminal 20 and the scanner module 90 can be released without performing a user operation of giving an instruction to end the shopping. Thus, it is possible to appropriately use the information terminal 20 owned by the consumer.

### Second Embodiment

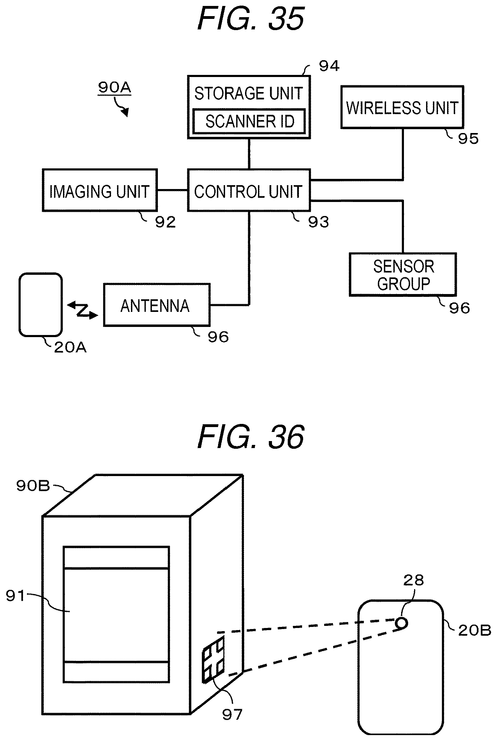

Next, a second embodiment will be described with reference to FIG. 35.

FIG. 35 is a block diagram illustrating a functional configuration of a scanner module 90A according to the second embodiment. The same reference numerals are given to common units to the scanner module 90 of the first embodiment.

As illustrated in FIG. 35, the scanner module 90A includes an antenna 96 for short-range wireless communication in addition to the imaging unit 92, the control unit 93, the memory 94, and the wireless unit 95. For example, the antenna 96 is provided in the stand 200 of the cart C. That is, when the information terminal 20A corresponding to short-range wireless communication is put on the stand 200, the information terminal 20A performs short-range wireless communication with the antenna 96. In the second embodiment, the data of the coordination ID stored in the information terminal 20A is transmitted to the scanner module 90A through the short-range wireless communication. The scanner module 90A transmits the data of the coordination ID read from radio waves received by the antenna 96 by the control unit 93 to the store server 30 along with the scanner ID. The subsequent operations are similar to those of the first embodiment.

According to the second embodiment, it is also possible to obtain similar operations and effects as those of the first embodiment. Further, the consumer merely puts the information terminal 20 on the stand 200 and may not hold the code symbol CD1 of the coordination ID displayed on the touch panel 25 to the reading window 91 of the scanner module 90. Accordingly, further satisfactory operability can be achieved.

### Third Embodiment

Next, a third embodiment will be described with reference to FIGS. 36 to 38.

FIG. 36 is a schematic explanatory diagram of the third embodiment. As illustrated in FIG. 36, in the third embodiment, a sticker 97 of a 2-dimensional code is attached to one surface of the scanner module 90B mounted on the cart C. The sticker 97, a scanner ID is formed by a 2-dimensional code allocated to the scanner module 90B. In the third embodiment, a consumer images the sticker 97 using the camera 28 included in the information terminal 20B before starting shopping.

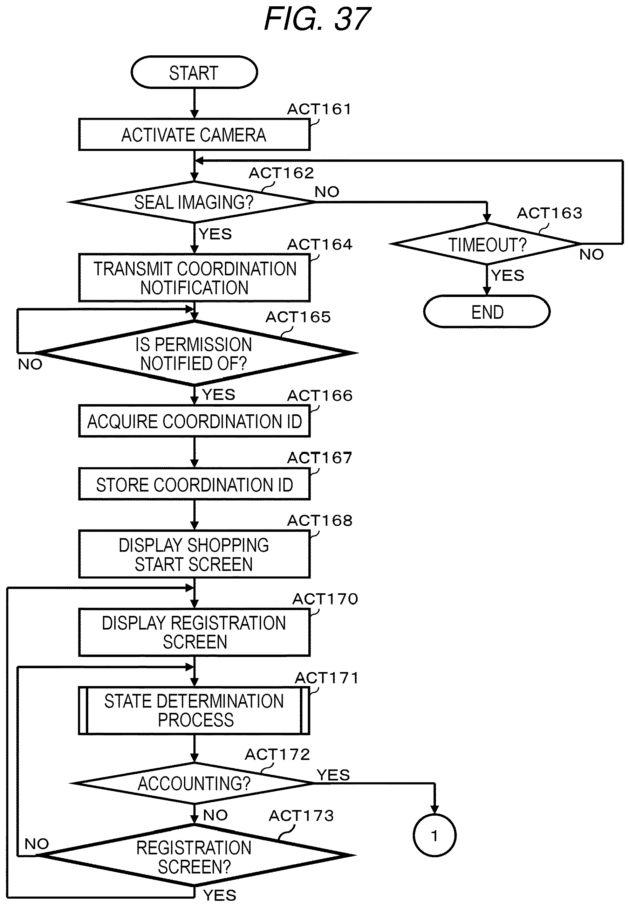

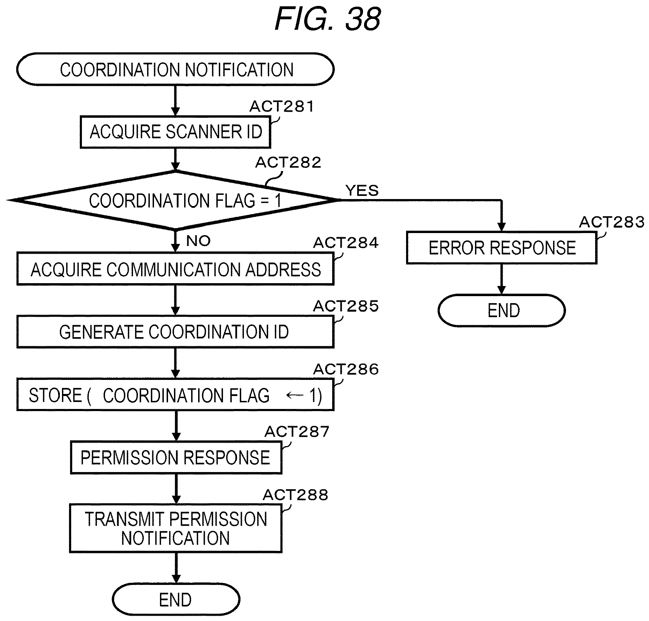

FIG. 37 is a flowchart illustrating an order of information processing performed by a processor 21 of an information terminal 20B and equivalent to the processing order of FIG. 11 described in the first embodiment. FIG. 38 illustrates an order of a coordination notification command reception process performed by the processor 11 of the coordination server 10 and equivalent to the processing order of FIG. 17 described in the first embodiment.

The processor 21 of the information terminal 20B activates the camera 28 in ACT 161. In ACT 162, the processor 21 determines whether the sticker 97 is imaged by the camera 28. When the sticker 97 is not imaged, the processor 21 determines NO in ACT 162 and the process proceeds to ACT 163. In ACT 163, the processor 21 determines whether a time which has passed after the activation of the camera 28 exceeds a preset timeout. The timeout is, for example, 10 seconds. When the time which has passed does not exceed the timeout, the processor 21 determines NO in ACT 163 and the process returns to ACT 162. Here, the processor 21 waits in ACT 162 and ACT 163 until the sticker 97 is imaged or the timeout has passed. When the timeout has passed in this waiting state, the processor 21 determines YES in ACT 163 and ends the process.

When the sticker 97 is imaged by the camera 28 before the passing of the timeout, the processor 21 determines YES in ACT 162 and the process proceeds to ACT 164. In ACT 164, the processor 21 controls the wireless device 24 such that a coordination notification command is transmitted to the coordination server 10. Through this control, the coordination notification command is wirelessly transmitted from the wireless device 24. The coordination notification command is received by the coordination server 10 via the wide area network NW1. The coordination notification command includes a communication address of the information terminal 20, for example, an IP address. The coordination notification command also includes the scanner ID read from the image of the sticker 97.

The processor 11 of the coordination server 10 receiving the coordination notification command via the second communication interface 15 starts information processing in the order illustrated in the flowchart of FIG. 38. That is, the processor 11 acquires the coordination ID from the coordination notification command in ACT 281. Hereinafter, the coordination ID is referred to as the acquired coordination ID. In ACT 282, the processor 11 retrieves the terminal coordination table 17 and determines whether the coordination flag in the same row as the row of the acquired coordination ID is set to "1."

When the coordination flag is set to "1," the processor 11 determines YES in ACT 282 and the process proceeds to ACT 283. In ACT 283, the processor 11 controls the first communication interface 14 such that an error response command is transmitted to the information terminal 20B which is the transmission source of the coordination notification command. Through this control, the error response command is transmitted from the first communication interface 14. The error response command is received by the information terminal 20B via the wide area network NW1.

When the coordination flag is set to "0," the processor 11 determines NO in step ACT 282 and the process proceeds to ACT 284. In ACT 284, the processor 11 acquires the communication address of the information terminal 20B from the coordination notification command. In ACT 285, the processor 11 generates the unique coordination ID.

In ACT 286, the processor 11 stores the coordination ID generated in ACT 285, the communication address acquired in ACT 284, and the scanner ID acquired in ACT 281 in the same row in the terminal coordination table 17. The processor 11 sets "0" in the coordination flag in the same row.

In ACT 287, the processor 11 controls the second communication interface 15 such that a permission response command is transmitted to the store server 30. Through this control, the permission response command is transmitted from the second communication interface 15. The permission response command is received by the router 80 via the communication network NW3 and is further received by the store server 30 via the in-store network NW2. The permission response command includes the scanner ID. The scanner ID is acquired in the process of ACT 281.

The processor 31 of the store server 30 receiving the permission response command performs the processes of ACT 307 to ACT 310 of FIG. 23 described in the first embodiment.

In ACT 288, the processor 11 controls the first communication interface 14 such that a permission notification command is transmitted using the communication address acquired in the process of ACT 284 as a destination. Through this control, the permission notification command is wirelessly transmitted from the first communication interface 14. The permission notification command is received by the wireless device 24 of the information terminal 20B in which the communication address of the destination is set via the wide area network NW1. The permission notification command includes the data of the coordination ID generated in the process of ACT 285. Then, the processor 11 of the coordination server 10 ends the process of receiving the coordination notification command.

FIG. 37 is referred back to for description.

The processor 21 of the information terminal 20B controlling the transmission of the coordination notification command waits for the permission notification command in ACT 165. When the permission notification command is received via the wireless device 24, the processor 21 determines YES in ACT 165 and the process proceeds to ACT 166. In ACT 166, the processor 21 acquires the data of the coordination ID from the permission notification command. In ACT 167, the processor 21 stores the data of the coordination ID. A destination in which the data is stored may be the volatile memory area of the main memory 22 or may be the auxiliary storage device 23.

In ACT 168, the processor 21 displays the shopping start screen SC2 on the touch panel 25. Thereafter, in ACT 170 to ACT 173, the processor 21 performs the processes of ACT 109 to ACT 112 of the first embodiment similarly.

According to the third embodiment, it is also possible to obtain similar operations and effects as those of the first embodiment. Further, according to the third embodiment, the consumer activating the shopping support program 29 of the information terminal 20 can perform shopping by merely imaging the sticker 97 of the scanner module 90B using the camera 28. Accordingly, compared to the first embodiment in which the consumer operates a shopping start button after activating the shopping support program 29 and waits for display of the code symbol CD1 of the coordination ID on the touch panel 25, and the code symbol CD1 is read by the scanner module 90, it is possible to shorten a time until the consumer can start the shopping.

The embodiments of the commodity sales processing system for which operability is good when a consumer registers purchase commodities and facility cost of a store can be reduced have been described above, but the embodiments are not limited thereto.

For example, in the foregoing embodiments, the commodity sales processing system including the self-accounting machine 50 and the manned accounting machine 60 has been exemplified. For example, by using code settlement with a smartphone, it is possible to omit the self-accounting machine 50 and the manned accounting machine 60.

In the foregoing embodiments, the cases in which the coordination ID is automatically generated in the coordination server 10 have been exemplified. For example, by setting the communication address set in the information terminal 20 as the coordination ID, the process of generating the coordination ID can be omitted.

In the foregoing embodiments, the dedicated server executing the virtual POS application, that is, the virtual POS server 40, is provided in the store ST1. In another embodiment, the virtual POS server may be a cloud computing server. In this way, a plurality of stores can share the virtual POS server.

The various screens SC1 to SC4 displayed on the touch panel 25 of the information terminal 20 are not limited to the illustrated screens including content of messages. In short, information necessary for a consumer who is an operator may be delivered in various manners.

While certain embodiments have been described these embodiments have been presented by way of example only, and are not intended to limit the scope of the inventions. Indeed, the novel embodiment described herein may be embodied in a variety of other forms; furthermore, various omissions, substitutions and changes in the form of the embodiment described herein may be made without departing from the scope of the inventions. The accompanying claims and the equivalents are intended to cover such forms or modifications as would fall within the scope of the invention.

## Claims

1. A commodity sales processing system, comprising:
a handheld wireless terminal including a display;
a shopping cart including a code reader and a terminal holder, the terminal holder including a charging connector connectable to the handheld wireless terminal; and
a server system communicable with the handheld wireless terminal and the code reader, the server system configured to:
store a first ID of the handheld wireless terminal that is received from the handheld wireless terminal or the code reader, in association with a second ID of the code reader that is received from the handheld wireless terminal or the code reader;
receive from the code reader a commodity code read thereby and store the received commodity code in a shopping list associated with the second ID; and
generate image data indicating the shopping list, and cause an image based on the generated image data to be displayed on the display of the handheld wireless terminal only when the handheld wireless terminal is connected to the charging connector.

2. The commodity sales processing system according to claim 1, wherein
the handheld wireless terminal is configured to display a code symbol representing a code corresponding to the first ID on the display, and
the code reader is configured to transmit to the server system the code read from the code symbol along with the second ID of the code reader.

3. The commodity sales processing system according to claim 1, wherein a code corresponding to the first ID includes a third ID identifying association of the first ID with the second ID, the third ID being assigned by the server system and received by the handheld wireless terminal.

4. The commodity sales processing system according to claim 1, wherein
the code reader is communicable with the handheld wireless terminal, and
the code reader is configured to receive a code corresponding to the first ID from the handheld wireless terminal, and transmit to the server system the code received from the handheld wireless terminal along with the second ID of the code reader.

5. The commodity sales processing system according to claim 1, wherein
the code reader includes on a surface thereof a code symbol representing the second ID of the code reader, and
the handheld wireless terminal includes a camera and is configured to transmit to the server system the first ID and the second ID that is obtained from an image of the code symbol captured by the camera.

6. The commodity sales processing system according to any one of claims 1 to 5, wherein
a first server in the server system is communicable with the handheld wireless terminal via a first wireless network, and
a second server in the server system is communicable with the code reader via a second wireless network including an access point provided in a store, the second wireless network being different from the first wireless network.

7. The commodity sales processing system according to any one of claims 1 to 6, wherein the handheld wireless terminal is further configured to perform an operation to determine a state of connection with the charging connector, and upon determining that the state of connection is a disconnected state, transmit to the server system information indicating the disconnected state.

8. The commodity sales processing system according to claim 7, wherein the handheld wireless terminal is further configured to disable display of the image on the display when the state of connection is the disconnected state.

9. The commodity sales processing system according to claim 7, wherein
the handheld wireless terminal is further configured to execute a shopping assist program to display screens to assist shopping and disable display of the screens on the display when the state of connection is the disconnected state.

10. The commodity sales processing system according to claim 7, wherein the server system is further configured to dissociate the second ID from the first ID upon receiving the information indicating the disconnected state.

11. The commodity sales processing system according to claim 7, wherein the server system is further configured to disable settlement based on the shopping list upon receiving the information indicating the disconnected state.

12. The commodity sales processing system according to claim 7, wherein
the handheld wireless terminal includes a power unit configured to output a signal indicating whether or not the handheld wireless terminal is chargeable via the charging connector, and
the handheld wireless terminal is configured to determine the disconnected state based on the signal from the power unit.

13. A commodity sales processing method using a system including a handheld wireless terminal including a display, a shopping cart including a code reader and a terminal holder, the terminal holder including a charging connector connectable to the handheld wireless terminal, and a server system communicable with the handheld wireless terminal and the code reader, the method comprising:
receiving, by the server system, a first ID of the handheld wireless terminal from the handheld wireless terminal or the code reader;
receiving, by the server system, a second ID of the code reader from the handheld wireless terminal or the code reader;
storing, in the server system, the first ID of the handheld wireless terminal in association with the second ID of the code reader;
receiving, by the server system, a commodity code read by the code reader;
storing the received commodity code in a shopping list associated with the second ID; and
generating, by the server system, image data indicating the shopping list, to cause an image based on the generated image data to be displayed on the display of the handheld wireless terminal only when the handheld wireless terminal is connected to the charging connector.

14. The commodity sales processing method according to claim 13, further comprising:
displaying a code symbol representing a code corresponding to the first ID on the display of the handheld wireless terminal;
reading, by the code reader, the code symbol displayed on the display; and
transmitting from the code reader to the server system the code read from the code symbol along with the second ID of the code reader.

15. The commodity sales processing method according to claim 13, wherein the code reader is communicable with the handheld wireless terminal, and the method further comprises:
receiving, by the code reader, a code corresponding to the first ID from the handheld wireless terminal; and
transmitting, from the code reader to the server system, the code received from the handheld wireless terminal along with the second ID of the code reader.
